(19) **Europäisches Patentamt / European Patent Office / Office européen des brevets**

(11) **EP 4 112 875 B1**

(12) **FASCICULE DE BREVET EUROPEEN**

(45) Date de publication et mention de la délivrance du brevet:
**20.03.2024 Bulletin 2024/12**

(21) Numéro de dépôt: **22180811.6**

(22) Date de dépôt: **23.06.2022**

(51) Classification Internationale des Brevets (IPC):
***E21B 43/00*** (2006.01)

(52) Classification Coopérative des Brevets (CPC):
**E21B 43/00;** E21B 2200/20; Y02E 10/10

(54) **PROCÉDÉ POUR SIMULER LES ÉCOULEMENTS D'UN FLUIDE DANS UNE FORMATION SOUTERRAINE COMPORTANT UN RÉSEAU DE FRACTURES**

VERFAHREN ZUR SIMULATION VON FLUIDSTRÖMEN IN EINER UNTERIRDISCHEN FORMATION MIT EINEM BRUCHNETZWERK

METHOD FOR SIMULATING THE FLOWS OF A FLUID IN AN UNDERGROUND FORMATION COMPRISING A NETWORK OF CRACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2021 FR 2107120**

(43) Date de publication de la demande:
**04.01.2023 Bulletin 2023/01**

(73) Titulaire: **IFP Energies nouvelles
92500 Rueil-Malmaison (FR)**

(72) Inventeur: **DING, Didier Yu
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
• P. LEMONNIER ET AL: "Simulation of Naturally Fractured Reservoirs. State of the Art", OIL & GAS SCIENCE AND TECHNOLOGY &NDASH; REVUE DE L&RSQUO;INSTITUT FRANÇAIS DU PÉTROLE, vol. 65, no. 2, 1 mars 2010 (2010-03-01), pages 239-262, XP055042196, ISSN: 1294-4475, DOI: 10.2516/ogst/2009066

## Description

## Domaine technique

La présente invention concerne le domaine de la modélisation des écoulements d'un fluide dans une formation souterraine comportant un réseau de fractures. La présente invention trouve une application particulière dans le domaine de la géothermie, mais peut aussi s'appliquer dans le domaine de l'exploration et de l'exploitation pétrolière.

La diversification des différentes sources d'énergies permet de réduire la dépendance aux énergies fossiles et ainsi de répondre aux enjeux de la transition énergétique. Dans ce contexte, le marché mondial de la production géothermique est appelé à doubler dans les dix années à venir.

La ressource géothermique exploite le gradient géothermique (augmentation de la température avec la profondeur) naturel de la Terre, qui peut être très variable en fonction des sites. Ainsi, pour capter l'énergie géothermique, on fait circuler un fluide dans le sous-sol, à plus ou moins grandes profondeurs en fonction de la température désirée et selon le gradient thermique local. Ce fluide peut être naturellement présent dans la roche (aquifère) ou bien être volontairement injecté dans le sous-sol. Le fluide se réchauffe au contact des roches du sous-sol et remonte, chargé de calories (énergie thermique), qui sont transmises dans un échangeur de chaleur. Puis le fluide est réinjecté dans le milieu, une fois refroidi et après filtrage.

Une simulation numérique des écoulements dans le sous-sol permet de fournir des informations essentielles à une exploitation géothermique optimale. Tout d'abord, une telle simulation peut être avantageusement utilisée avant la mise en place de toute installation, afin de déterminer le potentiel d'un site envisagé pour une exploitation géothermique, ou encore afin de déterminer l'emplacement, la géométrie et la profondeur des puits injecteur/producteur. La simulation numérique des écoulements peut être également avantageusement utilisée pour la surveillance d'un site géothermique, notamment pour optimiser la production tout en préservant le potentiel géothermique de ce site, ou encore pour la surveillance des interactions avec les aquifères environnants.

Les sites favorables à une exploitation géothermique sont souvent localisés dans des zones géologiquement actives, telles des zones volcaniques. Ces zones sont le plus souvent caractérisées par des réseaux de fractures, qui ont un impact très important sur les écoulements de fluide, les fractures pouvant agir comme des drains ou des barrières aux écoulements de fluide. Il est donc important que les simulateurs numériques des écoulements utilisés permettent une modélisation réaliste des écoulements, y compris dans le cas d'un milieu fracturé.

Or une modélisation exacte des écoulements dans un milieu fracturé demanderait des mailles extrêmement fines pour modéliser les hétérogénéités que représentent les failles. Afin de limiter les temps de calcul, des modèles approchés des milieux fracturés ont été proposés dans la littérature du domaine de l'exploration et de l'exploitation pétrolière.

## Technique antérieure

Les documents suivants seront cités au cours de la description :

- Aliyu, M.D., Chen, H.P., Harireche, O. and Hills, C.D. (2017) "Numerical Modelling of Geothermal Réservoirs with Multiple Pore Media", PROCEEDINGS, 42nd Workshop on Geothermal Réservoir Engineering, Stanford University, California, USA, 13-15 February.

- Austria, J. and O'Sullivan, M. (2015) "Dual Porosity Models of a Two-phase Geothermal Réservoir" Proceedings World Geothermal Congress 2015, Melbourne, Australia, 19-25 April.

- Fujii, S., Ishigami, Y. and Kurihara, M. (2018) "Development of Geothermal Réservoir Simulator for Predicting Three-dimensional Water-Steam Flow Behavior Considering Non-equilibrium State and Kazemi/MINC Double Porosity System" GRC Transaction, vol.42.

- Omagbon, J., O'Sullivan, M., O'Sullivan, J. and Walker, C. (2016) "Expériences in Developing a Dual Porosity Model of the Leyte Geothermal Production Field" Proceedings of 38th New Zealand Geothermal Workshop, Auckland, New Zealand, 23-25 Nov.

- Warren, J. E. & Root, P. J. (1963) "The Behavior of Naturally Fractured Réservoirs", SPE Journal, Volume 3, pp. 245-255.

- Lemonnier, P. and Bourbiaux, B. (2010) "Simulation of Naturally Fractured Réservoirs. State of the Art Part 2, MatriX-fractures Transfers and Typical Features of Numerical Studies" Oil & Gas Science and Technology, Vol. 65 (2010), No. 2, pp. 263-286

Dans le domaine pétrolier, le modèle double porosité, décrit notamment dans le document (Warren et Root, 1963), est largement utilisé pour simuler les écoulements dans les réservoirs fracturés. Cette approche suppose que le réservoir fracturé est décomposé en des blocs parallélépipédiques identiques, appelés blocs matriciels, délimités par un système orthogonal de fractures uniformes continues orientées suivant les directions principales d'écoulement. Dans un modèle double porosité (encore appelé modèle double milieu), le milieu à modéliser est décomposé en un milieu « fractures » et un milieu « matriciel ».

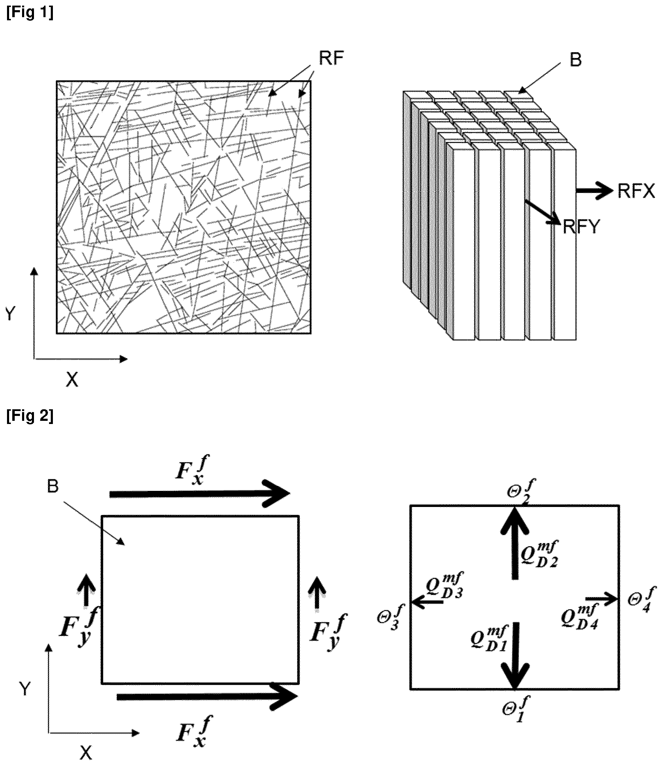

Avec un tel modèle, tout volume élémentaire (maille du modèle de réservoir) du réservoir fracturé est associé à une fraction de bloc(s) matriciel(s). L'écoulement des fluides, à l'échelle du réservoir, s'effectue à travers les fractures pour l'essentiel, des échanges de fluides interviennent localement entre les blocs matriciels et les fractures, et les quantités de fluide sont essentiellement stockés dans les matrices. La figure 1 présente de manière illustrative un exemple de formation souterraine présentant un réseau de fractures RF (à gauche) et un modèle double porosité équivalent (à droite), formé de blocs parallélépipédiques B, délimités par un système de fractures RFX, RFY orthogonales entre elles.

Ce type de modèles est de plus en plus utilisé dans le domaine de la géothermie, comme décrit par exemple dans les documents (Austria et O'Sullivan, 2015 ; Omagbon et al., 2016 ; Aliyu et al., 2017 ; Fugii et al., 2018).

Toutefois, si le modèle double porosité est de manière générale particulièrement adapté à la modélisation des écoulements dans le domaine pétrolier, pour lequel la convection est le mécanisme de transport principal, le modèle double porosité n'est pas adapté aux réservoirs fracturés géothermiques, où le mécanisme de conduction thermique joue un rôle très important.

En effet, le modèle double porosité selon l'art antérieur implique par construction que pression et température soient des constantes dans une maille au sein du milieu fractures. Si on peut supposer que la pression est localement une constante au sein du milieu fractures, du fait de la forte perméabilité dans les fractures, une telle hypothèse n'est pas adaptée pour la température, car la conductivité thermique dans les fractures est en réalité très faible (comme dans la matrice). Autrement dit, dans un milieu fracturé, la diffusion de température est beaucoup plus lente que la diffusion de pression dans les fractures.

Considérons un bloc matriciel B carré comme illustré par la Figure 2 à gauche, avec un écoulement principal dans la direction X, c'est-à-dire $F_x^f \gg F_y^f$ où F le flux d'écoulement. Quelle que soit la direction d'écoulement, la pression autour de ce bloc matriciel est presque constante en raison de la forte perméabilité dans les fractures. Par conséquent, le flux d'échange entre matrice et fractures dû à la convection est quasiment uniforme autour de ce bloc, tant pour le flux massique que pour le flux thermique. Mais ce n'est pas toujours le cas pour la température et le flux thermique dû à la conduction, notamment lors d'une injection d'eau froide dans un milieu fracturé à température élevée (par exemple 200°C en géothermie).

En effet, le front de l'eau avance principalement le long des fractures orientées selon la direction principale d'écoulement, c'est-à-dire la direction X. La température diminue d'abord dans les fractures parallèles à la direction X et la température dans les fractures parallèles à la direction Y change lentement, ce qui est illustré en Figure 2 à droite par les relations suivantes pour les températures dans fractures : $\Theta_1^f \approx \Theta_2^f \ll \Theta_3^f \approx \Theta_4^f$ , où $\Theta_i^f$ représente la température dans une fracture i, avec i=1, 4. Les échanges thermiques se produisent principalement entre le bloc matriciel et les fractures parallèles à la direction X en raison de sa faible température de fracture, tandis que les échanges avec les fractures parallèles à la direction Y sont limités par la température de fracture plus élevée. Ainsi, l'échange thermique dû à la conduction n'est pas uniforme sur les fractures, ce qui est illustré en figure 2 à droite par les relations suivantes pour les échanges thermiques par conduction : $Q_{D1}^{mf} \approx Q_{D2}^{mf} \gg Q_{D3}^{mf} \approx Q_{D4}^{mf}$ , où $Q_{Di}^{mf}$ représente un échange thermique dû à la conduction entre matrice et fracture pour la fracture i, avec i=1, 4. La température dans une fracture dépend de la quantité de l'eau froide qui la traverse ainsi que de l'échange matrice-fracture. Or dans un modèle double porosité selon l'art antérieur, il n'est pas possible d'avoir des températures distinctes suivant la direction des fractures pour calculer l'échange matrice-fracture par la conduction. Les simulations peuvent donc être imprécises.

Un modèle double porosité selon l'art antérieur ne permet donc pas de modéliser correctement le transfert de chaleur par conduction entre matrice et fractures. Certains auteurs (par exemple, Fujii et al., 2018) ont d'ailleurs observé que le temps d'arrivée de l'eau froide mesuré réellement à un puits producteur peut parfois être beaucoup plus rapide que le temps prédit par une simulation numérique d'écoulement basée sur un modèle double porosité.

La présente invention vise à pallier ces inconvénients. En particulier, la présente invention concerne une simulation des écoulements d'un fluide dans une formation souterraine comportant un réseau de fractures, implémentant un modèle de porosité permettant d'améliorer la modélisation du transfert thermique par conduction par rapport à un modèle double porosité selon l'art antérieur. Plus précisément, le modèle de porosité selon l'invention décompose le milieu à modéliser en un milieu matriciel, un premier milieu « fractures » représentatif des fractures orientées dans une première direction, et un deuxième milieu « fractures » représentatif des fractures orientées dans une deuxième direction orthogonale à la première direction. Un tel modèle permet de prendre en compte de manière distincte la diffusion de pression et la diffusion de température dans les milieux fractures en fonction de leur direction, et donc de mieux modéliser le transfert thermique pour simuler les réservoirs de géothermie fracturés.

**Résumé de l'invention**

La présente invention concerne un procédé mis en oeuvre par ordinateur pour simuler des écoulements d'un fluide dans une formation souterraine comportant un réseau de fractures en vue d'exploiter ledit fluide de ladite formation souterraine, dans lequel, à partir de mesures de propriétés relatives à ladite formation, on construit une représentation maillée de ladite formation et on détermine au moins des paramètres statistiques relatifs audit réseau de fractures, et ledit procédé comprenant au moins les étapes suivantes :

A) A partir au moins desdits paramètres statistiques relatifs audit réseau de fractures, on construit un modèle de porosité de ladite formation souterraine comportant ledit réseau de fractures, ledit modèle de porosité comprenant un premier milieu représentatif d'une matrice non fracturée de ladite formation, un deuxième milieu représentatif desdites fractures de ladite formation orientées selon une première direction, et un troisième milieu représentatif desdites fractures de ladite formation orientées selon une deuxième direction, lesdites première et deuxième directions étant orthogonales entre elles ;

B) A partir au moins desdites mesures de propriétés relatives à ladite formation, des paramètres statistiques relatifs audit réseau de fractures, et dudit modèle de porosité, on détermine des paramètres d'écoulement en chacune des mailles de ladite représentation maillée, lesdits paramètres d'écoulement comprenant au moins :

- entre deux mailles voisines dans ladite deuxième direction, une transmissibilité de convection et une transmissibilité de conduction dudit fluide selon lesdites première et deuxième directions dans ledit deuxième milieu, lesdites transmissibilités de convection et de conduction dudit fluide étant nulles selon ladite deuxième direction dans ledit deuxième milieu,

- entre deux mailles voisines dans ladite première direction, une transmissibilité de convection et une transmissibilité de conduction dudit fluide selon lesdites première et deuxième directions dans ledit troisième milieu, lesdites transmissibilités de convection et de conduction dudit fluide étant nulles selon ladite première direction dans ledit troisième milieu,

- au sein d'une maille de ladite représentation maillée, des échanges de masse par convection, des échanges d'énergie par convection et des échanges d'énergie par conduction entre lesdits deuxième et troisième milieux, entre lesdits premier et deuxième milieux, et entre ledit premier milieu et ledit troisième milieu,

C) à partir de ladite représentation maillée et desdits paramètres d'écoulement en chacune des mailles de ladite représentation maillée, on simule lesdits écoulements dudit fluide dans ladite formation souterraine comportant ledit réseau de fractures au moyen d'un simulateur d'écoulement implémentant ledit modèle de porosité.

Selon une mise en oeuvre de l'invention, lesdits échanges de masse $F_{w,i}^{ff}$ par convection entre lesdits deuxième et troisième milieux dans une desdites mailles i de ladite représentation maillée peuvent être déterminés selon une formule :

$$F_{w,i}^{ff} = \lambda_i^f T_i^{ff} (P_i^{fX} - P_i^{fY})$$

où $T_i^{ff}$ est une transmissibilité de convection entre lesdits deuxième et troisième milieux de ladite maille i, $P_i^{fX}$ et $P_i^{fY}$ correspondent à une pression dans respectivement lesdits deuxième et troisième milieux de ladite maille i, et $\lambda_i^f$ est une mobilité dudit fluide entre lesdits deuxième et troisième milieux de ladite maille i.

Selon une mise en oeuvre de l'invention, lesdits échanges d'énergie par convection $F_{H,i}^{ff}$ entre lesdits deuxième et troisième milieux dans une desdites mailles i de ladite représentation maillée peuvent être déterminés selon une formule :

$$F_{H,i}^{ff} = \lambda_i^f H_i^f T_i^{ff} (P_i^{fX} - P_i^{fY})$$

où $H_i^f$ est une enthalpie dudit fluide entre lesdits deuxième et troisième milieux de ladite maille i, $T_i^{ff}$ est ladite transmissibilité de convection entre lesdits deuxième et troisième milieux de ladite maille i, $P_i^{fX}$ et $P_i^{fY}$ correspondent à ladite pression dans respectivement lesdits deuxième et troisième milieux de ladite maille i, et $\lambda_i^f$ est ladite mobilité dudit fluide entre lesdits deuxième et troisième milieux de ladite maille i.

Selon une mise en oeuvre de l'invention, ladite transmissibilité de convection entre lesdits deuxième et troisième milieux de ladite maille i peut être déterminée selon une formule :

$$T_i^{ff} = \alpha \sum_{j\in\Omega_i}(T_{x,ij}^{fX} + T_{y,ij}^{fY})$$

où $\alpha$ est un coefficient multiplicateur valant au moins 100, de préférence au moins 1000, $\Omega_i$ est l'ensemble des mailles voisines de ladite maille i, $T_{x,ij}^{fX}$ correspond à ladite transmissibilité de convection selon ladite première direction dans ledit deuxième milieu pour ladite maille i, et $T_{y,ij}^{fY}$ correspond à ladite transmissibilité de convection selon ladite deuxième direction dans ledit troisième milieu pour ladite maille i.

Selon une mise en oeuvre de l'invention, lesdits échanges d'énergie par conduction $F_{D,i}^{ff}$ entre lesdits deuxième et troisième milieux dans ladite maille i peuvent être déterminés selon une formule :

$$F_{D,i}^{ff} = G_i^{ff}(\Theta_i^{fX} - \Theta_i^{fY})$$

où $G_i^{ff}$ est une transmissibilité de conduction entre lesdits deuxième et troisième milieux pour ladite maille i, $\Theta_i^{fX}$ et $\Theta_i^{fY}$ correspondent à la température respectivement dans lesdits deuxième et troisième milieux.

Selon une mise en oeuvre de l'invention, ladite transmissibilité de conduction entre lesdits deuxième et troisième milieux pour ladite maille i peut être déterminée selon une formule :

$$G_i^{ff} = \Lambda_i^{ff} C_i^{ff}$$

où $\Lambda_i^{ff}$ est une moyenne arithmétique d'une conductivité thermique effective desdits deuxième et troisième milieux, $C_i^{ff}$ est un coefficient géométrique dépendant des dimensions de ladite maille i, des dimensions d'un des blocs matriciels selon lesquels ledit premier milieu est découpé, et de l'ouverture desdites fractures desdits deuxième et troisième milieux.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé mis en oeuvre par ordinateur pour simuler des écoulements d'un fluide dans une formation souterraine comportant un réseau de fractures tel que décrit ci-dessus, lorsque ledit programme est exécuté sur un ordinateur.

L'invention concerne en outre un procédé pour exploiter un fluide d'une formation souterraine comportant un réseau de fractures, dans lequel on met en oeuvre le procédé mis en oeuvre par ordinateur pour simuler des écoulements d'un fluide dans une formation souterraine comportant un réseau de fractures tel que décrit ci-dessus, et dans lequel, à partir au moins de ladite simulation desdits écoulements dans ladite formation souterraine, on détermine un schéma d'exploitation dudit fluide comprenant au moins une implantation d'au moins un puits injecteur et/ou d'au moins un puits producteur, et on exploite ledit fluide de ladite formation souterraine au moins en forant lesdits puits de ladite implantation et en les équipant d'infrastructures d'exploitation.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre un exemple de formation souterraine présentant un réseau de fractures (à gauche) et un modèle double porosité selon l'art antérieur équivalent (à droite).

La figure 2 illustre de manière schématique un exemple de bloc matriciel, avec les flux d'écoulement dans les fractures délimitant ce bloc (à gauche), ainsi que les températures et les échanges thermiques par conduction dans les factures de ce bloc (à droite).

La figure 3 présente une section à profondeur constante de réseau de fractures dans un exemple de réservoir fracturé.

La figure 4 compare l'évolution dans le temps de la température de l'eau produite à un puits producteur simulée par un simulateur d'écoulement implémentant un modèle de porosité selon l'art antérieur, un simulateur d'écoulement implémentant un modèle de porosité selon l'invention, et un simulateur utilisant un modèle de référence (TREF).

La figure 5 représente les variations de température de l'eau dans les directions X et Y, obtenues au moyen de la modélisation de référence, après 1000 jours.

La figure 6 représente les variations de pression de l'eau dans les directions X et Y, obtenues au moyen de la modélisation de référence après 1000 jours.

La figure 7 représente les variations de température T de l'eau dans les directions X et Y déterminées au moyen d'un modèle de porosité selon l'art antérieur dans le milieu fractures, après 1000 jours.

La figure 8 représente les variations de température de l'eau dans les directions X et Y déterminées au moyen d'un modèle de porosité selon l'invention, dans le milieu X-fractures (à gauche) et dans le milieu Y-fractures (à droite), après 1000 jours.

La figure 9 représente les variations de pression de l'eau dans les directions X et Y déterminées au moyen d'un modèle de porosité selon l'invention, dans le milieu X-fractures (à gauche) et dans le milieu Y-fractures (à droite), après 1000 jours.

**Description des modes de réalisation**

Selon un premier aspect, l'invention concerne un procédé pour simuler des écoulements d'un fluide dans une formation souterraine comportant un réseau de fractures.

Le fluide contenu dans le réservoir géologique étudié peut être essentiellement aqueux (notamment de l'eau), ou bien comporter une phase huile et/ou une phase gazeuse et/ou une phase aqueuse, et éventuellement comprendre un polymère ou un tensio-actif.

La formation souterraine étudiée peut être un réservoir géologique du sous-sol, en l'espèce fracturé, par exemple destinée à une exploitation géothermique.

Selon un deuxième aspect, l'invention concerne un procédé pour exploiter un fluide contenu dans une formation souterraine comportant un réseau de fractures, au moyen d'un procédé pour simuler les écoulements d'un fluide selon le premier aspect de l'invention.

Il est bien clair que le procédé de simulation selon le premier aspect de l'invention est exécuté en vue de fournir des résultats de simulation permettant une exploitation du fluide de la formation souterraine comportant le réseau de fractures selon le deuxième aspect de l'invention, par exemple non limitatifs dans un procédé de géothermie ou dans un procédé de récupération des hydrocarbures.

La présente invention requiert de disposer :

- de mesures de propriétés relatives à la formation souterraine étudiée : il s'agit d'une part de mesures de propriétés pétrophysiques, réalisées in situ ou bien en laboratoire, telles que des mesures de la porosité, la perméabilité, la lithologie (c'est-à-dire le type de roche), la perméabilité relative ou encore la pression capillaire. Ces mesures peuvent avoir été obtenues par exemple par analyse en laboratoire de carottes prélevées in situ, ou bien via des diagraphies réalisées dans des puits traversant la formation souterraine étudiée, ou encore par des campagnes d'acquisition sismique. Il s'agit d'autre part de mesures des propriétés des fluides s'écoulant dans la formation souterraine étudiée, telles que des mesures de débits d'huile, de débits d'eau, de pression ou encore de saturation. Ces mesures peuvent avoir été obtenues par exemple par des mises en production du fluide en certains puits traversant la formation souterraine étudiée, au cours de tests de puits ou encore de tests d'interférence. De manière générale, il s'agit de mesures de propriétés bien connues par le spécialiste en simulation d'écoulement dans une formation souterraine ;

- d'une représentation maillée représentative de la formation souterraine étudiée, appelée aussi modèle de réservoir dans le domaine pétrolier : il s'agit d'une sorte de maquette du sous-sol construite dans le but de décrire aussi précisément que possible la structure, les propriétés pétrophysiques et les propriétés des fluides de la formation souterraine étudiée. Cette maquette est généralement représentée sur un ordinateur, et consiste en un maillage ou grille, chacune des mailles de cette grille comportant une ou plusieurs valeurs de propriétés relatives au réservoir étudié (telles que porosité, perméabilité, saturation, faciès géologique, pression etc.). Un modèle de réservoir se doit de vérifier autant que possible les propriétés collectées sur le terrain : les données de diagraphie mesurées le long des puits, les mesures réalisées sur des échantillons de roche prélevés par exemple par carottage, les données déduites de campagnes d'acquisition sismique, les données de production comme les débits d'huile, d'eau, les variations de pression etc. Le spécialiste en simulation de réservoir a pleine connaissance de méthodes pour construire une telle représentation maillée d'un réservoir géologique. A noter que le modèle de réservoir peut se confondre avec le modèle géologique lorsque la puissance informatique est suffisante pour permettre des calculs numériques de simulation d'écoulement sur une grille à mailles fines. Dans les autres cas, le spécialiste pourra avoir recours à une technique d'« upscaling » (mise à l'échelle) afin de passer d'un modèle aux mailles fines (le modèle géologique) à un modèle aux mailles plus grossières (le modèle de réservoir). Cette étape d'upscaling peut être réalisée par exemple à l'aide du logiciel CobraFlow™ (IFP Energies nouvelles, France). Selon une mise en oeuvre de l'invention, la représentation maillée du réservoir géologique étudié comporte au moins une valeur de saturation, une valeur de pression, une température, une composition du mélange fluide, une perméabilité, une porosité, une pression capillaire, une perméabilité relative et une taille de pores dans chacune de ses mailles.

- d'un simulateur d'écoulement selon l'invention : un simulateur d'écoulement est un programme numérique, exécuté sur un ordinateur, qui est utilisé pour simuler l'écoulement d'un fluide dans un milieu poreux. La simulation d'écoulement, dite aussi simulation de réservoir dans le milieu pétrolier, permet notamment de prédire numériquement les déplacements au cours du temps d'un fluide présent et/ou injecté dans une formation souterraine, et en particulier la quantité de fluide produite à un puits producteur (vers lequel le fluide va se déplacer par gradient de pression, et duquel il va pouvoir être extrait). Le simulateur d'écoulement selon l'invention, qui implémente notamment un modèle de porosité selon l'invention, sera décrit de manière détaillée dans l'étape 4 ci-dessous.

Selon une mise en oeuvre de l'invention, le procédé selon l'invention comporte au moins les étapes suivantes :

**1) Caractérisation du réseau de fractures**

**2) Construction d'un modèle de porosité**

**3) Détermination de paramètres d'écoulement**

**4) Simulation des écoulements**

**5) Exploitation du fluide de la formation souterraine**

Selon une mise en oeuvre de l'invention, le procédé selon le premier aspect de l'invention comporte au moins les étapes 2) à 4). Selon une mise en oeuvre de l'invention, le procédé selon le deuxième aspect de l'invention comporte au moins les étapes 2) à 5). L'étape 1) peut être réalisée une unique fois, pour la formation souterraine considérée, préalablement à l'application des étapes 2) à 4) (et le cas échant des étapes 2) à 5)) qui peuvent être répétées sans répétition de l'étape 1).

**1) Caractérisation du réseau de fractures**

Au cours de cette étape, il s'agit caractériser le réseau de fractures de la formation souterraine étudiée, à partir des mesures de propriétés relatives à la formation. Cette étape peut avantageusement avoir été réalisée au préalable, et une unique fois, avant la mise en oeuvre au moins des étapes 2 à 4 ci-dessous.

**1.1) Détermination de paramètres statistiques**

Au cours de cette sous-étape, il s'agit de déterminer des paramètres statistiques (connus sous l'acronyme PSF) tels que l'orientation des fractures ou la densité de fractures, permettant de caractériser le réseau de fractures de la formation souterraine étudiée. Cette sous-étape requiert des mesures de propriétés relatives à la formation, permettant une caractérisation directe ou indirecte de la fracturation. Des informations sur la fracturation d'une formation souterraine peuvent être obtenues via des :

- carottes, extraites de la formation étudiée, et à partir desquelles une étude statistique des fractures intersectées peut être effectuée ; et/ou

- affleurements, qui présentent l'avantage de fournir une vision à grande échelle du réseau de fractures ; et/ou

- images sismiques, permettant d'identifier de grands événements géologiques et la géométrie des différentes structures de la formation.

Préférentiellement, on détermine une pluralité de paramètres statistiques de fractures afin de caractériser au mieux la fracturation présente au sein de la formation, lesdits paramètres pouvant être choisis parmi la densité des fractures observées, leur longueur, leur orientation dans l'espace, leur ouverture, leur perméabilité et leur distribution au sein de la couche étudiée.

On dispose ainsi de paramètres statistiques décrivant le réseau de fractures de la formation étudiée. Ces paramètres peuvent être utilisés pour déterminer des mailles représentatives de la représentation maillée (cf. sous-étape 1.2 optionnelle) et/ou un modèle de réseau de fractures discret (cf. sous-étape 1.3 optionnelle), à l'échelle d'une maille de la représentation maillée ou bien d'une maille représentative de la représentation maillée.

**1.2) Détermination de mailles représentatives (optionnelle)**

Cette sous-étape est facultative et consiste à déterminer au moins une maille représentative d'un groupe de mailles de la représentation maillée.

Selon un mode de mise en oeuvre de l'invention, on constitue un groupe de mailles de la représentation maillée selon un critère basé sur les caractéristiques du réseau de fractures présent dans lesdites mailles, par exemple par une mesure de semblance. Ainsi, les mailles regroupées en un groupe de mailles ont des caractéristiques similaires en termes de fracturation. Cette analyse de la ressemblance peut être effectuée non limitativement à partir des paramètres statistiques décrivant le réseau de fractures, ces paramètres étant déterminés à la sous-étape 1.1.

Selon un mode de mise en oeuvre de l'invention, on attribue une maille représentative au groupe de mailles de la représentation maillée ainsi constitué. Non limitativement, on peut attribuer audit groupe de mailles une maille quelconque dudit groupe de mailles, ou bien une maille dont les caractéristiques (orientation des fractures par exemple) se rapprochent de la moyenne des caractéristiques du groupe de mailles en question.

Selon un mode de réalisation de la présente invention, à l'issue de cette étape, une pluralité de groupes de mailles a été constitué, de sorte que toute maille de la représentation maillée ait été attribuée à un groupe de mailles, et chaque groupe de mailles étant associé à une maille représentative.

On peut avoir avantage à considérer une maille représentative d'un groupe de mailles en vue d'un gain en temps de calculs et de mémoire informatique. En effet, on peut par exemple effectuer des calculs requis à une étape ou sous-étape pour la maille représentative considérée, et ensuite attribuer le résultat de ces calculs à chacune des mailles dudit groupe de mailles, générant ainsi un gain en temps de calcul et de mémoire informatique.

### 1.3) Construction d'un modèle de réseau de fractures discret (optionnelle)

Cette sous-étape est facultative et consiste à construire une image réaliste du réseau de fractures caractérisé par les paramètres statistiques (PSF) déterminés à la sous-étape 1.1, en passant par un modèle de réseau de fractures discret (connu sous l'acronyme DFN, pour « Discrète Fracture Network » en anglais).

Cette sous-étape peut être effectuée pour une maille de la représentation maillée ou pour une maille représentative d'un groupe de mailles de la représentation maillée le cas échéant (cf. étape 1.2 optionnelle), et peut être répétée pour chacune des mailles de la représentation maillée ou pour chacune des mailles représentatives de groupes de mailles de la représentation maillée le cas échéant (cf. étape 1.2 optionnelle).

Ainsi au cours de cette sous-étape, on associe à au moins une maille donnée une représentation détaillée (DFN) de la complexité interne du réseau de fractures, aussi fidèle que possible des observations directes et indirectes du réservoir.

Pour construire un modèle de réseau de fractures discret (DFN), en au moins une maille de la représentation maillée, on peut utiliser des logiciels de modélisation, bien connus des spécialistes, tel que le logiciel FRACAFlow® (IFP Energies nouvelles, France).

### 2) Construction d'un modèle de porosité

Au cours de cette étape, il s'agit de construire un modèle de porosité (c'est-à-dire un modèle représentatif de la porosité) de la formation souterraine comportant le réseau de fractures (c'est-à-dire le milieu fracturé), à partir au moins des paramètres statistiques de fractures.

Au cours de cette étape, on construit un modèle de porosité de la formation souterraine comprenant un premier milieu représentatif d'une matrice non fracturée de la formation étudiée, un deuxième milieu représentatif des fractures de la formation orientées selon une première direction, et un troisième milieu représentatif des fractures de la formation orientées selon une deuxième direction, les première et deuxième directions étant orthogonales entre elles.

Autrement dit, au cours de cette étape, on décompose la formation souterraine comportant le réseau de fractures en un ensemble de blocs matriciels non fracturés (c'est-à-dire un bloc composé uniquement par une matrice et ne comportant pas de fractures) délimités par deux milieux fractures distincts, orthogonaux entre eux. Ainsi, le modèle de porosité selon l'invention décompose l'unique milieu fractures du modèle double porosité selon l'art antérieur en deux milieux fractures distincts.

Par la suite et à des fins de simplification de l'exposé, le premier milieu est dit "milieu matriciel", les deuxième et troisième milieux sont dits "milieux fractures", et on appelle « modèle double porosité-double fracture » le modèle de porosité selon l'invention. Par ailleurs, on appelle milieu « X-fractures » le milieu fractures représentatif des fractures orientées selon la première direction, et milieu « Y-fractures » le milieu fractures représentatif des fractures orientées selon la direction perpendiculaire à la première direction.

Il est bien clair que les dimensions des blocs parallélépipédiques du milieu matriciel peuvent être différentes des dimensions des mailles de la représentation maillée. Ainsi, de manière générale, un bloc parallélépipédique du milieu matriciel peut être de dimension supérieure ou inférieure à la dimension d'une maille de la représentation maillée et inversement. Par conséquent, les limites des blocs parallélépipédiques peuvent ne pas correspondre aux limites des mailles de la représentation maillée.

Selon une mise en oeuvre de l'invention, l'une des directions des milieux fractures peut correspondre à la direction principale d'écoulement et l'autre direction correspond à la direction perpendiculaire à la direction principale d'écoulement. La direction principale d'écoulement peut être déterminée à partir des paramètres statistiques de fractures déterminés à l'étape 1 ci-dessus, et/ou bien de manière plus générale à partir des mesures de propriétés relatives à la formation étudiée.

Selon une mise en oeuvre de l'invention, la taille des blocs parallélépipédiques du milieu matriciel non fracturé du modèle double porosité-double fracture selon l'invention peut être déterminée de manière similaire à l'une quelconque des méthodes mises en oeuvre dans le cas d'un modèle double porosité selon l'art antérieur. Par exemple, on peut utiliser les méthodes décrites dans les documents FR 2757957 (US 6064944) et FR 2923930 (US 8688424), qui décrivent un procédé permettant de calculer la dimension caractéristique d'un bloc matriciel, représentatif des blocs de roche non fracturés, à partir d'un modèle de réseau de fractures discret, d'une analyse d'image et de l'interpolation d'une courbe d'invasion. Alternativement, on peut également mettre en oeuvre la méthode décrite dans le document FR 3045868 (US 10641923).

### 3) Détermination de paramètres d'écoulement

Au cours de cette étape, à partir au moins du modèle de porosité selon l'invention, des paramètres statistiques du réseau de fractures et des mesures de propriétés relatives à la formation, on détermine des paramètres d'écoulement en chacune des mailles de la représentation maillée.

Selon l'invention, les paramètres d'écoulement déterminés à cette étape comprennent au moins :

- entre deux mailles voisines de la représentation maillée dans la direction X, une transmissibilité du fluide par convection et une transmissibilité du fluide par conduction selon les directions X et Y dans le milieu X-fractures, les transmissibilités du fluide par convection et par conduction étant nulles selon la direction Y dans le milieu X-fractures.

- entre deux mailles voisines de la représentation maillée dans la direction Y, une transmissibilité du fluide par convection et une transmissibilité du fluide par conduction selon les directions X et Y dans le milieu Y-fractures, les transmissibilités du fluide par convection et par conduction étant nulles selon la direction X dans le milieu Y-fractures.

- au sein d'une maille de ladite représentation maillée, des échanges de masse par convection, des échanges d'énergie par convection et des échanges d'énergie par conduction entre le milieu X-fractures et le milieu Y-fractures, ainsi qu'entre le milieu matriciel et le milieu X-fractures et entre le milieu matriciel et le milieu X-fractures.

Ainsi, le modèle de porosité selon l'invention permet de décrire des échanges de masse et d'énergie distincts en fonction de la direction des fractures, contrairement au modèle double porosité selon l'art antérieur. En effet, le premier milieu fractures permet de décrire les échanges dans une première direction, et le deuxième milieu fractures permet de décrire les échanges dans une deuxième direction. Les deux milieux fractures étant connectés à chaque maille, on peut transférer la masse librement par convection entre les deux milieux fracture au sein d'une maille. De plus, le modèle de porosité selon l'invention est adapté pour tenir compte d'une diffusion de température plus lente dans une direction de fracture que dans l'autre.

Nous détaillons ci-après des modes de réalisation de détermination des paramètres d'écoulement pour une maille i donnée, ou entre une maille i et une maille j voisines. Ces calculs sont donc à répéter pour couvrir l'ensemble des mailles de la représentation maillée.

Par la suite, l'exposant m représente le milieu matriciel, l'exposant fX représente le milieu X-fractures, l'exposant fY représente le milieu Y-fractures, l'exposant *ff* représente l'échange entre les milieux X-fractures et Y-fractures, l'exposant mfX représente l'échange entre milieu matriciel et milieu X-fractures, et l'exposant mfY représente l'échange entre milieu matriciel et milieu Y-fractures.

**3.1) Paramètres d'écoulement liés aux échanges dans le milieu X-fractures**

Nous décrivons ci-après des modes de réalisation de la détermination de paramètres d'écoulement liés aux échanges de fluide dans le milieu X-fractures entre deux mailles i et j voisines.

Selon l'invention, entre deux mailles i et j voisines dans la direction Y, la transmissibilité de convection $T_{y,ij}^{fX}$ et la transmissibilité de conduction $G_{y,ij}^{fX}$ selon la direction Y sont nulles dans le milieu X-fractures, ce qui peut s'écrire sous la forme :

$$T_{y,ij}^{fX} = 0$$

$$G_{y,ij}^{fX} = 0$$

Selon une mise en oeuvre de l'invention, entre deux mailles i et j voisines dans la direction X, la transmissibilité de convection $T_{x,ij}^{fX}$ et la transmissibilité de conduction $G_{x,ij}^{fX}$ selon la direction X dans le milieu X-fractures peuvent s'écrire :

$$T_{x,ij}^{fX} = K_{x,ij}^{fX} \frac{\Delta y \Delta z}{\Delta x_{ij}}$$

$$G_{x,ij}^{fX} = \Lambda_{x,ij}^{fX} \frac{\Delta y \Delta z}{\Delta x_{ij}}$$

où $\Delta y$ est la taille des mailles i et j voisines dans la direction Y, $\Delta z$ est la taille des mailles i et j voisines dans la direction Z (les mailles i et j voisines ont la même taille en Y et Z), $\Delta x_{ij}$ est la distance entre les centres des mailles i et j voisines, $K_{x,ij}^{fX}$ est la perméabilité effective dans la direction X du milieu X-fractures entre les mailles i et j voisines, et $\Lambda_{x,ij}^{fX}$ est la conductivité thermique effective dans la direction X du milieu X-fractures. Il est à noter que la perméabilité effective $K_{x,ij}^{fX}$ est identique à celle du milieu fractures dans la direction X du modèle double porosité selon l'art antérieur, et la conductivité thermique effective $\Lambda_{x,ij}^{fX}$ est aussi identique à celle du milieu fractures du modèle double porosité selon l'art antérieur. Ainsi, les transmissibilités $T_{x,ij}^{fX}$ et $G_{x,ij}^{fX}$ décrites ci-dessus correspondent aux transmissibilités respectivement de convection et de conduction dans la direction X du modèle double porosité selon l'art antérieur.

Selon une mise oeuvre de l'invention, on peut déterminer le volume poreux $V_i^{fX}$ d'une maille i dans le milieu X-fractures selon une formule du type :

$$V_i^{fX} = \frac{w_{fx}/L_y}{w_{fx}/L_y + w_{fy}/L_x} V_i^f$$

où $L_x$ est la taille de bloc matriciel dans la direction X, $L_y$ est la taille de bloc matriciel dans la direction Y, $w_{fx}$ est l'ouverture de fracture de la direction X, et $w_{fy}$ est l'ouverture de fracture de la direction Y, $V_i^f$ est le volume poreux de la maille i du milieu fractures selon l'art antérieur, ce qui peut s'écrire $V_i^f = \emptyset_f \Delta x \Delta y \Delta z$ avec $\emptyset_f$ la porosité effective du milieu fractures selon l'art antérieur.

### 3.2) Paramètres d'écoulement liés aux échanges dans le milieu Y-fractures

Nous décrivons ci-après des modes de réalisation de la détermination des paramètres d'écoulement liés aux échanges de fluide dans le milieu Y-fractures entre deux mailles i et j voisines.

Selon l'invention, entre deux mailles i et j voisines dans la direction X, la transmissibilité de convection $T_{x,ij}^{fY}$ et la transmissibilité de conduction $G_{x,ij}^{fY}$ selon la direction X sont nulles dans le milieu Y-fractures, ce qui peut s'écrire sous la forme :

$$T_{x,ij}^{fY} = 0$$

$$G_{x,ij}^{fY} = 0$$

Selon une mise en oeuvre de l'invention, entre deux mailles i et j voisines dans la direction Y, la transmissibilité de convection $T_{y,ij}^{fY}$ et la transmissibilité de conduction $G_{y,ij}^{fY}$ selon la direction Y dans le milieu Y-fractures peuvent s'écrire :

$$T_{y,ij}^{fY} = K_{y,ij}^{fY} \frac{\Delta x \Delta z}{\Delta y_{ij}}$$

$$G_{y,ij}^{fY} = \Lambda_{y,ij}^{fY} \frac{\Delta x \Delta z}{\Delta y_{ij}}$$

où $\Delta x$ est la taille des mailles i et j voisines dans la direction X, $\Delta z$ est la taille des mailles i et j voisines dans la direction Z (les mailles i et j voisines ont la même taille en Y et Z), $\Delta y_{ij}$ est la distance entre les centres des mailles i et j voisines, $K_{y,ij}^{fY}$ est la perméabilité effective dans la direction Y du milieu Y-fractures entre les mailles i et j voisines, et $\Lambda_{y,ij}^f$ est la conductivité thermique effective dans la direction Y du milieu Y-fractures entre les mailles i et j voisines. Il est à noter que la perméabilité effective $K_{y,ij}^f$ est identique à celle du milieu fractures dans la direction Y du modèle double porosité selon l'art antérieur, et la conductivité thermique effective $\Lambda_{y,ij}^{fY}$ est aussi identique à celle du milieu fractures dans la direction Y du modèle double porosité selon l'art antérieur.

Ainsi, les transmissibilités $T_{y,ij}^{fX}$ et $G_{y,ij}^{fX}$ décrites ci-dessus correspondent aux transmissibilités respectivement de convection et de conduction dans la direction Y du modèle double porosité selon l'art antérieur.

Selon une mise en oeuvre de l'invention, on peut déterminer le volume poreux $V_i^{fY}$ du milieu Y-fractures dans la maille i selon une formule du type :

$$V_i^{fY} = \frac{w_{fy}/L_x}{w_{fx}/L_y + w_{fy}/L_x} V_i^f \, .$$

### 3.3) Paramètres d'écoulement liés aux échanges entre le milieu X-fractures et le milieu Y-fractures

Nous décrivons ci-après des modes de réalisation de la détermination des paramètres d'écoulement liés aux échanges de fluide entre les deux milieux les milieux X-fractures et Y-fractures pour une maille i. Entre ces deux milieux, la diffusion de pression est très rapide en raison de la grande perméabilité des fractures, mais la diffusion de température est lente en raison de la faible conductivité thermique. Les paramètres d'écoulement définis ci-dessous visent à rendre compte de cette réalité physique.

Selon une mise en oeuvre de l'invention, on peut déterminer les échanges de masse par la convection entre les milieux X-fractures et Y-fractures dans une maille i, notés $F_{w,i}^{ff}$, selon une formule :

$$F_{w,i}^{ff} = \lambda_i^f T_i^{ff} (P_i^{fX} - P_i^{fY})$$

où $T_i^{ff}$ est la transmissibilité de convection entre les milieux X-fractures et Y-fractures, $P_i^{fX}$ et $P_i^{fY}$ correspondent à la pression dans les milieux respectivement X-fractures et Y-fractures, et $\lambda_i^f$ est la mobilité du fluide entre les deux milieux fractures de la maille i.

Selon une mise en oeuvre de l'invention, la mobilité du fluide $\lambda_i^f$ peut être déterminée par un schéma numérique décentré amont, selon le sens d'écoulement (ou selon les valeurs de pression) :

$$\lambda_i^f = \begin{cases} \dfrac{\rho_i^{fX}}{\mu_i^{fX}} & si \ P_i^{fX} \geq P_i^{fY} \\ \dfrac{\rho_i^{fY}}{\mu_i^{fY}} & sinon \end{cases}$$

où $\rho_i^{fX}$ et $\rho_i^{fY}$ sont les masses volumiques du fluide dans la maille i dans les milieux X-fractures et Y-fractures respectivement de la maille i, et $\mu_i^{fX}$ et $\mu_i^{fY}$ sont les viscosités du fluide dans respectivement les milieux X-fractures et Y-fractures de la maille i.

Selon une mise en oeuvre de l'invention, on peut déterminer les échanges d'énergie par la convection entre les milieux X-fractures et Y-fractures dans la maille i, notés $F_{H,i}^{ff}$, selon une formule :

$$F_{H,i}^{ff} = \lambda_i^f H_i^f T_i^{ff} (P_i^{fX} - P_i^{fY})$$

où $H_i^f$ est l'enthalpie entre les milieux X-fractures et Y-fractures, $T_i^{ff}$ est la transmissibilité de convection entre les milieux X-fractures et Y-fractures, $P_i^{fX}$ et $P_i^{fY}$ correspondent à la pression dans les milieux respectivement X-fractures et Y-fractures, et $\lambda_i^f$ est la mobilité du fluide entre les deux milieux fractures de la maille i. Selon une mise en oeuvre de l'invention, on peut déterminer le terme $\lambda_i^f H_i^f$ selon un schéma numérique décentré amont de la manière suivante :

$$\lambda_i^f H_i^f = \begin{cases} \dfrac{\rho_i^{fX}}{\mu_i^{fX}} H_i^{fX} & si \ P_i^{fX} \geq P_i^{fY} \\ \dfrac{\rho_i^{fY}}{\mu_i^{fY}} H_i^{fY} & sinon \end{cases}$$

où $H_i^{fX}$ est l'enthalpie du fluide dans le milieu X-fractures de la maille i, et $H_i^{fY}$ est l'enthalpie du fluide dans le milieu Y-fractures de la maille i.

Selon une mise en oeuvre de l'invention, on peut déterminer les échanges d'énergie par la conduction entre les milieux X-fractures et Y-fractures dans la maille i, notés $F_{D,i}^{ff}$, selon une formule :

$$F_{D,i}^{ff} = G_i^{ff} (\Theta_i^{fX} - \Theta_i^{fY})$$

où $G_i^{ff}$ est la transmissibilité de conduction entre les milieux X-fractures et Y-fractures, qui peut être déterminée selon une formule :

$$G_i^{ff} = \Lambda_i^{ff} C_i^{ff}$$

où $\Lambda_i^{ff}$ est une moyenne arithmétique de la conductivité thermique effective des milieux X-fractures et Y-fractures, $C_i^{ff}$ est un coefficient géométrique dont un mode de détermination est décrit ci-après, $\Theta_i^{fX}$ et $\Theta_i^{fY}$ correspondent à la température dans les milieux respectivement X-fractures et Y-fractures.

Avantageusement, on peut utiliser une transmissibilité de convection $T_i^{ff}$ entre les milieux X-fractures et Y-fractures au moins 100 fois plus grande, et de préférence au moins 1000 fois plus grande, que la somme des transmissibilités autour de la maille i, ce qui peut s'écrire :

$$T_i^{ff} = \alpha \sum_{j \in \Omega_i} (T_{x,ij}^{fX} + T_{y,ij}^{fY})$$

où $\Omega_i$ est l'ensemble des mailles voisines de la maille *i,* et $\alpha$ est un coefficient multiplicateur valant au moins 100, et valant de préférence au moins 1000, $T_{x,ij}^{fX}$ correspond à la transmissibilité de convection selon la direction X dans le milieu X-fractures, et $T_{y,ij}^{fY}$ correspond à la transmissibilité de convection selon la direction Y dans le milieu Y-fractures.

Une grande valeur de la transmissibilité de convection $T_i^{ff}$ permet d'une diffusion rapide de la pression entre ces deux milieux fracturés. Cela permet que le transfert par convection soit libre, sans barrière, entre les deux milieux fracturés. Les pressions $P_i^{fX}$ et $P_i^{fX}$ dans les deux milieux sont ainsi quasiment identiques.

Selon une mise en oeuvre de l'invention, on peut déterminer un coefficient géométrique $C_i^{ff}$, relatif à la conduction entre les milieux X-fractures et Y-fractures à l'échelle de la maille i, selon une formule du type :

$$C_i^{ff} = \frac{V_{Gi}}{V_b} C_b$$

où $V_b$ est le volume du bloc matriciel, $V_{Gi}$ est le volume géométrique de la maille i, et $C_b$ est un coefficient géométrique relatif à l'échange par conduction thermique entre les fractures en X et en Y autour d'un bloc matriciel. Le coefficient géométrique $C_b$ est donc à l'échelle du bloc matriciel alors que le coefficient $C_i^{ff}$ est à l'échelle de la maille. Selon une mise en oeuvre de l'invention, le coefficient géométrique $C_b$ à l'échelle du bloc matriciel peut être déterminé selon une formule du type :

$$\frac{4}{C_b} = \frac{1}{C_{bx}} + \frac{1}{C_{by}}$$

où $C_{bx}$ est un coefficient géométrique entre une fracture en X et un sommet du bloc matriciel (point de connexion entre une fracture orientée selon la direction X et une fracture orientée selon la direction Y), $C_{by}$ est le coefficient géométrique entre une fracture en Y et le sommet du bloc matriciel. Selon une mise en oeuvre de l'invention, les coefficients géométriques $C_{bx}$ et $C_{by}$ entre respectivement une fracture en X et le sommet d'un bloc matriciel et entre une fracture en Y et le sommet d'un bloc peuvent être déterminés selon des formules du type :

$$C_{bx} = \frac{w_{fx}/2}{L_x/4}$$

$$C_{by} = \frac{w_{fy}/2}{L_y/4}$$

où $w_{fx}$ et $w_{fy}$ correspondent à l'ouverture de fracture en X et en Y respectivement, $L_x$ et $L_y$ correspondent à la taille de bloc matriciel selon respectivement la direction X et la direction Y. Ainsi, le coefficient géométrique $C_i^{ff}$ est fonction de la discrétisation numérique liée au maillage, aux dimensions du bloc matriciel, et à l'ouverture de fractures.

De cette manière, la transmissibilité de conduction $G_i^{ff}$ est proportionnelle à la conductivité thermique et aux ouvertures des fractures, et inversement proportionnelle aux tailles de bloc. Comme la conductivité thermique est faible et les ouvertures des fractures sont petites, la transmissibilité de conduction est généralement petite. Ce qui rend la diffusion thermique très lente entre les deux milieux fractures, et on peut avoir deux températures différentes dans les deux milieux.

### 3.4) Paramètres d'écoulement liés aux échanges entre le milieu matriciel et les milieux fractures

Nous décrivons ci-après des modes de réalisation de la détermination des paramètres d'écoulement liés aux échanges entre le milieu matriciel et les milieux X-fractures et Y-fractures pour une maille i.

Selon une mise en oeuvre de l'invention, on peut déterminer l'échange de masse par convection entre le milieu matrice et le milieu X-fractures $Q_{w,i}^{mfX}$ dans une maille i selon une formule du type :

$$Q_{w,i}^{mfX} = \lambda_i K^m V_{Gi} \sigma_X (P_i^m - P_i^{fX})$$

où $K^m$ est la perméabilité de matrice, $V_{Gi}$ est le volume géométrique de la maille i, $\sigma_X$ est un facteur de forme pour l'échange entre le milieu matrice et le milieu X-fractures dont un mode de détermination est décrit ci-dessous, $P_i^m$ est la pression dans le bloc matriciel et $P_i^{fX}$ est la pression dans le milieu X-fractures, $\lambda_i$ est la mobilité du fluide dans la maille i. Selon une mise en oeuvre de l'invention, on peut déterminer la mobilité du fluide $\lambda_i$ dans la maille i par un schéma numérique décentré amont selon une formule du type :

$$\lambda_i = \begin{cases} \dfrac{\rho_i^m}{\mu_i^m} & si\ P_i^m \geq P_i^{fX} \\ \dfrac{\rho_i^{fX}}{\mu_i^{fX}} & sinon \end{cases}$$

où $\rho_i^m$ est la masse volumique du fluide dans le milieu matrice dans la maille i, et $\mu_i^m$ est la viscosité du fluide dans le milieu matrice dans la maille i.

Selon une mise en oeuvre de l'invention, on peut déterminer l'échange d'énergie par convection entre le milieu matrice et le milieu X-fractures $Q_{H,i}^{mfX}$ dans une maille i selon une formule du type :

$$Q_{H,i}^{mfX} = \lambda_i H_i K^m V_{Gi} \sigma_X (P_i^m - P_i^{fX}),$$

où $H_i$ est l'enthalpie du fluide dans la maille i, $K^m$ est la perméabilité de matrice, $V_{Gi}$ est le volume géométrique de la maille i, $\sigma_X$ est le facteur de forme pour l'échange entre le milieu matrice et le milieu X-fractures dont un mode de détermination est décrit ci-dessous, $P_i^m$ est la pression dans le bloc matriciel et $P_i^{fX}$ est la pression dans le milieu X-fractures, $\lambda_i$ est la mobilité du fluide dans la maille i. Selon une mise en oeuvre de l'invention, on peut déterminer le terme $\lambda_i H_i$ dans la maille i par un schéma numérique décentré amont selon une formule du type :

$$\lambda_i \, H_i = \begin{cases} \dfrac{\rho_i^m}{\mu_i^m} H_i^m & si \ P_i^m \geq P_i^{fX} \\[2mm] \dfrac{\rho_i^{fX}}{\mu_i^{fX}} H_i^{fX} & sinon \end{cases}$$

où $H_i^m$ est l'enthalpie du fluide dans le milieu matriciel de la maille i. Selon une mise en oeuvre de l'invention, on peut déterminer l'échange thermique par conduction entre le milieu matriciel et le milieu X-fractures $Q_{D,i}^{mfX}$ dans une maille i selon une formule du type :

$$Q_{D,i}^{mfX} = \Lambda^m V_{Gi} \sigma_X (\Theta_i^m - \Theta_i^{fX})$$

où $\Lambda^m$ est la conductivité thermique effective dans le milieu matrice, $\Theta_i^m$ est la température dans le bloc matriciel et $\Theta_i^{fX}$ est la température dans le milieu X-fractures.

Selon une mise en oeuvre de l'invention, on peut déterminer l'échange de masse par convection entre le milieu matrice et le milieu Y-fractures $Q_{w,i}^{mfY}$ dans une maille i selon une formule du type :

$$Q_{w,i}^{mfY} = \lambda_i K^m V_{Gi} \sigma_Y (P_i^m - P_i^{fY})$$

où $\sigma_Y$ est le facteur de forme pour l'échange entre le milieu matrice et le milieu Y-fractures dont un mode de détermination est décrit ci-dessous, $P_i^m$ est la pression dans le bloc matriciel et $P_i^{fy}$ est la pression dans le milieu Y-fractures.

Selon une mise en oeuvre de l'invention, on peut déterminer l'échange d'énergie par convection entre le milieu matrice et le milieu Y-fractures $Q_{H,i}^{mfY}$ dans une maille i selon une formule du type :

$$Q_{H,i}^{mfY} = \lambda_i H_i V_{Gi} K^m \sigma_Y (P_i^m - P_i^{fY})$$

Selon une mise en oeuvre de l'invention, on peut déterminer l'échange thermique par conduction entre le milieu matrice et le milieu Y-fractures $Q_{D,i}^{mfY}$ dans une maille i selon une formule du type :

$$Q_{D,i}^{mfY} = \Lambda^m V_{Gi} \sigma_Y (\Theta_i^m - \Theta_i^{fY}),$$

où $\Theta_i^m$ est la température dans le bloc matriciel et $\Theta_i^{fY}$ est la température dans le milieu Y-fractures.

Selon une mise en oeuvre de l'invention, les facteurs de forme $\sigma_X$ et $\sigma_Y$ qui interviennent pour calculer le transfert entre matrice et les fractures dans les directions X et Y respectivement peuvent être déterminés selon des formules du type :

$$\sigma_X = \frac{L_x^2}{L_x^2 + L_y^2} \sigma$$

$$\sigma_Y = \frac{L_y^2}{L_x^2 + L_y^2} \sigma$$

où $L_x$ est la taille de bloc matriciel dans la direction X, $L_y$ est la taille de bloc matriciel dans la direction Y et $\sigma$ est le facteur de forme du modèle double porosité selon l'art antérieur. L'homme du métier connait parfaitement des moyens pour calculer le facteur de forme d'un modèle double porosité selon l'art antérieur. Selon une mise en oeuvre de l'invention, on peut se référer au document (Lemonnier, P. and Bourbiaux, B., 2010) pour un tel calcul.

## 4) Simulation des écoulements

Selon l'invention, on simule les écoulements du fluide dans la formation au moyen de la représentation maillée comprenant les paramètres d'écoulement déterminés à l'étape 3), et d'un simulateur d'écoulement implémentant le modèle de porosité selon l'invention déterminés à l'étape 2).

De manière générale, à tout instant t de la simulation, un simulateur d'écoulement résout l'ensemble des équations d'écoulement propres à chaque maille et délivre des valeurs solutions des inconnues (saturations, pressions, concentrations, température, ...) prédites à cet instant t. De cette résolution, découle notamment la connaissance des quantités de fluide produite à un puits producteur et de l'état de la formation souterraine (distribution des pressions, saturations, températures, etc...) à l'instant considéré.

Le simulateur d'écoulement, aussi appelé simulateur de réservoir, selon l'invention permet au moins la prise en compte d'un modèle double porosité-double fracture tel que décrit à l'étape 2) ci-dessus, et des paramètres d'écoulement en chaque maille de la représentation maillée tels que déterminés à l'étape 3) ci-dessus. Autrement dit, le simulateur d'écoulement selon l'invention est au moins apte à considérer que chaque maille de la représentation maillée est décomposée en blocs matriciels entourés de fractures, les fractures étant représentées par un premier milieu représentatif des fractures orientées selon une première direction, et par un deuxième milieu représentatif des fractures orientées selon une deuxième direction perpendiculaire à la première direction. Par ailleurs, le simulateur d'écoulement selon l'invention permet de prendre en compte les paramètres d'écoulement en lien avec le modèle double porosité-double fracture selon l'invention tels que définis à l'étape 3) ci-dessus.

Le simulateur d'écoulement selon l'invention permet de prédire de manière fiable les écoulements de fluide dans une formation souterraine présentant un réseau de fractures.

Il est bien clair que le procédé selon l'invention comprend des étapes mises en oeuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer les résultats du procédé.

En particulier, les moyens de traitement de données sont configurés pour mettre en oeuvre la simulation des écoulements au sein du réservoir géologique étudié, au moyen d'un simulateur d'écoulement selon l'invention tel que décrit ci-dessus.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre au moins des étapes 2 à 4 décrites précédemment, lorsque ledit programme est exécuté sur un ordinateur.

## 5) Exploitation du fluide de la formation souterraine

Cette étape est mise en oeuvre dans le cadre du procédé selon le deuxième aspect de l'invention, et qui concerne un procédé pour exploiter un fluide de la formation souterraine étudiée.

Dans le domaine de la géothermie, il s'agit de déterminer au moins un schéma d'exploitation d'un fluide essentiellement aqueux injecté dans la formation souterraine étudiée. Plus précisément, dans le domaine de la géothermie, on exploite la chaleur ou encore l'énergie du fluide injecté dans la formation et récupéré.

Dans le domaine pétrolier, il s'agit de déterminer au moins un schéma d'exploitation des hydrocarbures contenus dans la formation souterraine étudiée.

De manière générale, un schéma d'exploitation comprend un nombre, une géométrie et une implantation (position et espacement) des puits injecteurs et producteurs à forer dans le réservoir étudié et à équiper.

Dans le domaine pétrolier, un schéma d'exploitation peut en outre comprendre un type de récupération assistée des hydrocarbures contenus dans le réservoir, telle qu'une récupération au moyen de l'injection d'une solution comprenant un ou des polymères, de la mousse de $CO_2$, etc). Un schéma d'exploitation d'un réservoir d'hydrocarbures optimal doit par exemple permettre un fort taux de récupération des hydrocarbures piégés dans le réservoir géologique, sur une longue durée d'exploitation, et nécessitant un nombre de puits limité. Autrement dit, le spécialiste prédéfinit des critères d'évaluation selon lesquels un schéma d'exploitation du fluide d'un réservoir géologique est considéré comme suffisamment performant pour être mis en oeuvre sur le réservoir géologique étudié.

Selon l'invention, la détermination du schéma d'exploitation du fluide de la formation souterraine étudiée est réalisée à l'aide du simulateur d'écoulement selon l'invention, implémentant notamment le modèle double porosité-double fracture tel que décrit à l'étape 2) ci-dessus, et utilisant les paramètres d'écoulement tels que décrit à l'étape 3) ci-dessus. Un tel simulateur de réservoir peut être établi à partir du simulateur d'écoulement PumaFlow® (IFP Energies nouvelles, France).

Selon un mode de mise en oeuvre de l'invention, on définit différents schémas d'exploitation du fluide contenu dans le réservoir géologique étudié et on estime, à l'aide du simulateur d'écoulement selon l'invention, au moins un critère permettant d'évaluer la qualité de ces schémas d'exploitation.

Selon un mode de mise en oeuvre dans le domaine pétrolier, le critère d'évaluation peut être la quantité de fluide produit selon chacun des différents schémas d'exploitation, la courbe représentative de l'évolution de la production dans le temps au niveau de chacun des puits, le rapport huile sur gas (GOR) etc. Le schéma selon lequel les hydrocarbures contenus dans le réservoir sont réellement exploités peut alors correspondre à celui satisfaisant au moins un des critères d'évaluation des différents schémas d'exploitation. Selon une mise en oeuvre de l'invention, on réalise une pluralité de simulations d'écoulement pour une pluralité d'implantations de puits injecteurs-producteurs, au moyen du simulateur selon l'invention et au moyen des modèles de porosité déterminés et paramétrés en chacune des mailles de la représentation maillée, et on sélectionne l'implantation satisfaisant au moins un des critères d'évaluation prédéfinis. Avantageusement, on peut en outre réaliser une pluralité de simulations d'écoulement pour une pluralité de type de récupération assistée, au moyen du simulateur selon l'invention et au moyen des modèles de porosité déterminés et paramétrés en chacune des mailles de la représentation maillée, et on détermine le schéma d'exploitation selon lequel exploiter le fluide du réservoir géologique pour chacune des types de récupération assistée, et on sélectionne la récupération assistée satisfaisant au moins un des critères d'évaluation prédéfinis. Puis, une fois le schéma d'exploitation déterminé, les hydrocarbures piégés dans le réservoir pétrolier sont exploités en fonction de ce schéma d'exploitation, notamment au moins en forant les puits injecteurs et producteurs du schéma d'exploitation ainsi déterminés, et en installant les infrastructures de production nécessaires au développement de ce gisement. Dans le cas où le schéma d'exploitation a en outre été déterminé en estimant la production du réservoir associée à différents types de récupération assisté, on injecte dans le puits injecteur le ou les types d'additifs (polymère, tensio-actifs, mousse de $CO_2$) sélectionné tel que décrit ci-dessus.

Selon un mode de mise en oeuvre dans le domaine de la géothermie, le critère d'évaluation peut être l'énergie ou la température de fluide produit selon chacun des différents schémas d'exploitation, la quantité de fluide produit selon chacun des différents schémas d'exploitation etc. Le schéma selon lequel le fluide est exploité à des fins géothermiques peut alors correspondre à celui satisfaisant au moins un des critères d'évaluation des différents schémas d'exploitation. Selon l'invention, on réalise une pluralité de simulations d'écoulement pour une pluralité d'implantations de puits injecteurs-producteurs, au moyen du simulateur selon l'invention et au moyen des modèles de porosité déterminés et paramétrés en chacune des mailles de la représentation maillée, et on sélectionne le schéma d'exploitation satisfaisant au moins un des critères d'évaluation prédéfinis.

Une fois le schéma d'exploitation déterminé, on fore les puits injecteurs et producteurs du schéma d'exploitation ainsi déterminés, et on installe les infrastructures de production nécessaires au développement de ce site géothermique.

Il est bien entendu qu'un schéma d'exploitation peut être évolutif sur la durée d'une exploitation, en fonction des connaissances relatives au réservoir acquises pendant l'exploitation, des améliorations dans les différents domaines techniques intervenant lors d'une exploitation (améliorations dans le domaine du forage, de la récupération assistée par exemple).

**Exemples**

Les caractéristiques et avantages du procédé selon l'invention apparaîtront plus clairement à la lecture de l'exemple d'application ci-après.

Pour cet exemple d'application, on considère une formation souterraine destinée à une exploitation géothermique comportant deux familles de fractures, l'une orientée vers la direction X (direction principale d'écoulement) et l'autre orientée vers la direction Y. L'espacement du réseau de fractures dans la direction X est de 25 m, et l'espacement du réseau de fractures dans la direction Y est de 100 m. La perméabilité dans les fractures parallèles à la direction X est de 4 D (1 darcy = $9.869233 \times 10^{-13}$ m$^2$), et la perméabilité dans les fractures parallèles à l'axe Y est de 6 D. La perméabilité de la matrice est de 0,0001 mD. La zone pour laquelle on souhaite modéliser les écoulements est de dimension 500 m $\times$ 500 m $\times$ 10 m. La température initiale de ce réservoir est de 200 °C et sa pression initiale est de 255 bar (1 bar = 100 kPa).

On construit dans un premier temps une représentation maillée de ce réservoir, composée de 20 mailles dans la direction X et 20 mailles dans la direction Y, avec une taille de maille de 25 m $\times$ 25 m $\times$ 10 m.

A partir de paramètres statistiques relatifs au réseau de fractures, on construit un modèle double porosité-double fracture selon l'invention en considérant une décomposition de la formation souterraine en blocs matriciels de 100 m dans la direction X et de 25 m dans la direction Y, chaque bloc étant délimité par des fractures selon la direction X et des fractures selon la direction Y. Ainsi, le modèle double porosité-double fracture selon l'invention construit pour cet exemple d'application comprend un milieu matriciel, un premier milieu fractures dont les fractures sont orientées dans la direction X (milieu X-fractures), et un deuxième milieu fractures, distinct du premier milieu fractures, dont les fractures sont orientées selon la direction Y (milieu Y-fractures).

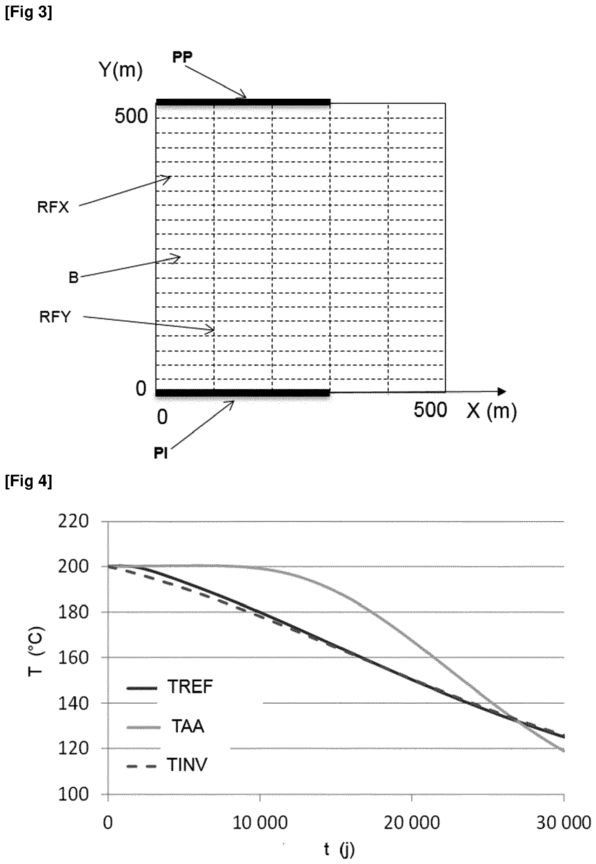

La Figure 3 illustre une section à profondeur constante dans le milieu fracturé considéré pour cet exemple d'application, profondeur à laquelle sont forés deux puits horizontaux PI, PP (représentés par deux traits noirs épais sur les bords du milieu fracturé selon la direction X) orientés selon la direction X et de longueur 300 m, un des puits étant un puits injecteur PI et l'autre puits étant un puits producteur PP. La Figure 3 montre également la répartition des blocs matriciels B et des fractures RFX orientées selon la direction X et des fractures RFY orientées selon la direction Y du modèle de porosité construit pour cet exemple d'application. L'ouverture de fracture est de 1 cm. Une eau à 80 °C avec un débit de 50000 kg/jour est injectée dans le puits injecteur PI, et un débit de 50000 kg/jour est produit par le puits producteur PP. La pression limite au puits producteur est de 50 bar.

Afin d'évaluer la qualité de la modélisation des écoulements au moyen du modèle de porosité selon l'invention, on réalise une modélisation de référence. Pour cela, on réalise une simulation d'écoulement sur une représentation maillée pour laquelle les failles sont explicitement discrétisées. Autrement dit, on réalise une simulation d'écoulement au moyen d'une représentation maillée à mailles très fines (1 cm pour discrétiser l'ouverture de la faille, et environ 10 centimètres pour discrétiser le milieu matrice dans la zone proche de fractures), permettant une prédiction réaliste des écoulements dans un tel milieu. Il est bien clair que les temps de calcul requis pour une telle simulation d'écoulement ne sont pas envisageables en routine, contrairement à des simulations d'écoulement mises en oeuvre au moyen de modèles de type double porosité ou double porosité-double fracture qui permettent d'utiliser des mailles plus grossières.

A des fins de comparaison, on construit en outre un modèle double porosité selon l'art antérieur, qui décompose la formation souterraine en blocs matriciels de 100 m × 25 m × 10 m, délimités par un milieu fractures unique.

La Figure 4 compare l'évolution dans le temps t (en jours j) de la température T de l'eau au puits producteur simulée par un simulateur d'écoulement implémentant le modèle double porosité selon l'art antérieur (courbe TAA), un simulateur d'écoulement implémentant le modèle double porosité-double fracture selon l'invention (courbe TINV), et un simulateur d'écoulement utilisant directement (c'est-à-dire sans passer par un modèle de porosité équivalent) le modèle de référence (TREF).

La modélisation de référence montre une percée thermique assez précoce en raison de la perméabilité élevée dans les fractures le long de la direction Y.

Cependant, on peut observer que la modélisation obtenue avec le modèle double porosité selon l'art antérieur se caractérise par une percée thermique très tardive, comparé à la modélisation de référence. En effet, l'échange thermique entre matrice et fractures est surestimé, en raison de la faible température dans les mailles fractures du modèle double porosité. On peut d'ailleurs constater qu'au bout de 10000 jours, la température de l'eau produite est toujours à la température initiale de 200 °C, tandis que la température de la modélisation de référence a diminué jusqu'à atteindre 180 °C. Cela s'explique par le fait qu'avec un modèle double porosité selon l'art antérieur, l'eau froide est supposée se déplacer à travers toutes les fractures de l'unique milieu fractures, et la température est abaissée dans toutes ces fractures uniformément. Ainsi, l'échange thermique entre matrice et fractures est surestimé avec un modèle double porosité selon l'art antérieur, en raison d'une température de fractures plus basse. Le front de l'eau froide est chauffé d'avantage par le transfert surestimé, et la percée thermique est donc retardée.

Au contraire, on peut observer que le modèle double porosité-double fracture selon l'invention fournit une modélisation plus proche de la modélisation de référence, car ce modèle permet de calculer des températures de fractures différentes au sein d'une même maille, en fonction de leurs orientations, ce qui permet d'obtenir un échange matrice-fracture plus précis.

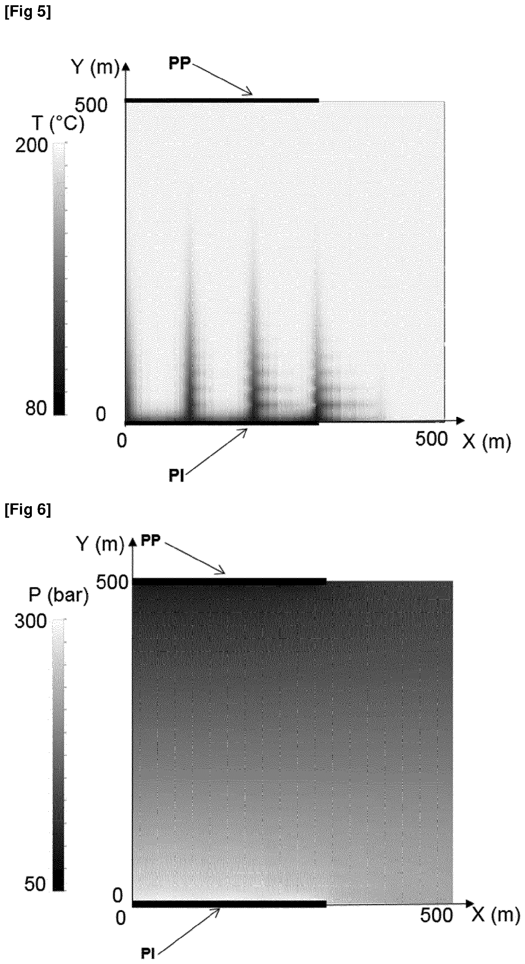

La figure 5 et la figure 6 représentent respectivement les variations de température T et de pression P de l'eau dans les directions X et Y, obtenues au moyen de la modélisation de référence après 1000 jours. On peut observer que l'eau froide avance rapidement le long des fractures orientées selon la direction Y entre le puits injecteur PI et le puits producteur PP, car les surfaces d'échange entre un bloc matriciel et les fractures dans cette direction sont relativement petites pour l'échange thermique. La température le long des fractures dans la direction X varie très lentement, en raison de la grande surface d'échange avec le bloc matriciel et de mauvaises connexions thermiques entre les fractures dans les directions X et Y. La température de fracture autour d'un bloc matriciel est ainsi très différente selon les orientations de fractures. On peut cependant observer que le front de pression se déplace de manière assez uniforme et que la pression de fracture est également uniforme autour d'un bloc matriciel, quelle que soit l'orientation des fractures.

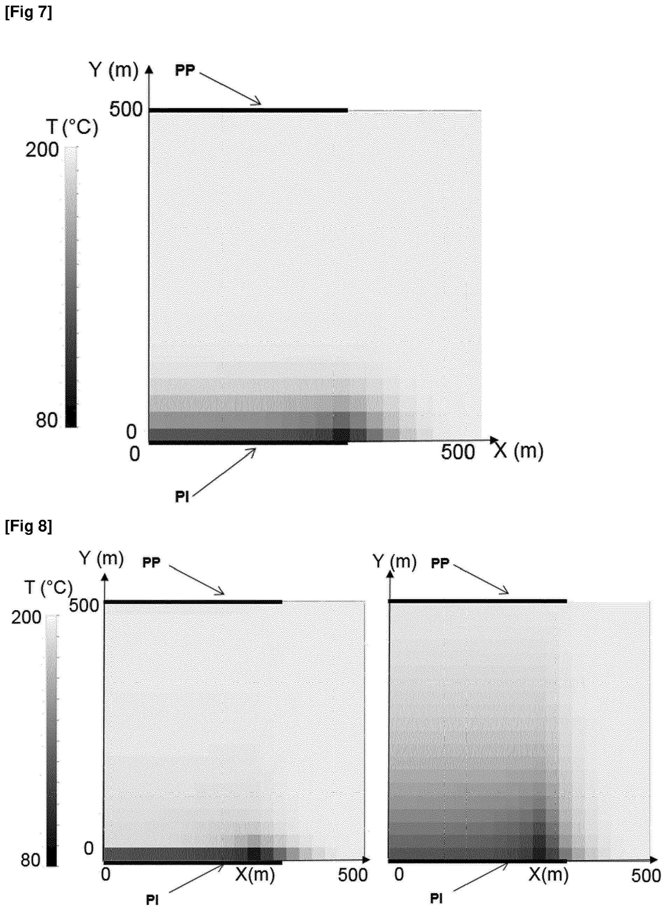

La Figure 7 représente les variations de température T de l'eau dans les directions X et Y déterminées au moyen du modèle double porosité selon l'art antérieur dans le milieu fractures, après 1000 jours. On peut observer sur cette figure que le front de températures se déplace lentement du puits injecteur PI vers le puits de producteur PP. En fait, dans la modélisation de référence, l'échange thermique entre les fractures en Y et un bloc matriciel est relativement faible, en raison de la petite surface de contact. La matrice ne peut pas fournir suffisamment de chaleur pour chauffer l'eau froide en déplacement. Mais avec le modèle double-porosité selon l'art antérieur, l'échange matrice-fracture se produit uniformément avec toutes les fractures entourant le bloc matriciel. L'échange avec les fractures dans la direction X est plus important que celui avec les fractures dans la direction Y, car la surface de contact est plus grande avec les fractures parallèles à la direction X. En d'autres termes, le modèle double porosité selon l'art antérieur surestime fortement l'échange thermique entre matrice et fractures dans cet exemple. Le front de l'eau froide ne peut donc pas avancer très rapidement.

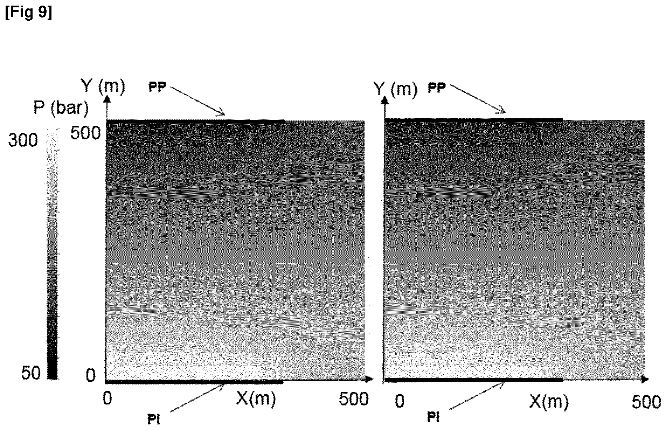

Les figures 8 à gauche et 8 à droite (respectivement 9 à gauche et 9 à droite) représentent les variations de température T (respectivement de pression P) de l'eau dans les directions X et Y déterminées au moyen du modèle double porosité-double fracture selon l'invention, dans le milieu X-fractures (figure 8 à gauche ; respectivement 9 à gauche) et dans le milieu Y-fractures (figure 8 à droite ; respectivement 9 à droite), après 1000 jours. On peut observer que dans le milieu X-fractures, qui représente les fractures orientées selon la direction X, le front de températures se déplace lentement du puits injecteur PI vers le puits producteur PP. Ce résultat est proche des températures dans les fractures orientées selon l'axe X prédites par la modélisation de référence. Dans le milieu Y-fractures, qui représente les fractures orientées selon la direction Y, le front de températures froides se déplace rapidement, de manière similaire (en moyenne) à l'avancée du front dans les fractures selon la direction Y de la modélisation de référence. En effet, dans le modèle double porosité-double fracture selon l'invention, on considère séparément les échanges entre un bloc matriciel et les fractures orientées selon la direction X et selon la direction Y. Par conséquent, la percée thermique peut être prédite avec plus de précision. Par ailleurs, comme observé en figures 9 à gauche et 9 à droite, les pressions dans les deux milieux X-fractures et Y-fractures sont presque identiques entre elles, et proches de celles prédites par la modélisation de référence, ce qui démontre bien que le modèle double porosité-double fracture selon l'invention est également approprié pour la modélisation des pressions.

Ainsi, le modèle de double porosité-double fracture selon l'invention permet une simulation plus fiable des écoulements dans les milieux fracturés dans lequel des échanges thermiques par conduction sont importants, en particulier dans le cas d'une exploitation géothermique.

**Revendications**

1.  Procédé mis en oeuvre par ordinateur pour simuler des écoulements d'un fluide dans une formation souterraine comportant un réseau de fractures en vue d'exploiter ledit fluide de ladite formation souterraine, dans lequel, à partir de mesures de propriétés relatives à ladite formation, on construit une représentation maillée de ladite formation et on détermine au moins des paramètres statistiques relatifs audit réseau de fractures, **caractérisé en ce que** ledit procédé comprend au moins les étapes suivantes :

    A) A partir au moins desdits paramètres statistiques relatifs audit réseau de fractures, on construit un modèle de porosité de ladite formation souterraine comportant ledit réseau de fractures, ledit modèle de porosité comprenant un premier milieu représentatif d'une matrice non fracturée de ladite formation, un deuxième milieu représentatif desdites fractures de ladite formation orientées selon une première direction, et un troisième milieu représentatif desdites fractures de ladite formation orientées selon une deuxième direction, lesdites première et deuxième directions étant orthogonales entre elles ;
    B) A partir au moins desdites mesures de propriétés relatives à ladite formation, des paramètres statistiques relatifs audit réseau de fractures, et dudit modèle de porosité, on détermine des paramètres d'écoulement en chacune des mailles de ladite représentation maillée, lesdits paramètres d'écoulement comprenant au moins :

    - entre deux mailles voisines dans ladite deuxième direction, une transmissibilité de convection et une transmissibilité de conduction dudit fluide selon lesdites première et deuxième directions dans ledit deuxième milieu, lesdites transmissibilités de convection et de conduction dudit fluide étant nulles selon ladite deuxième direction dans ledit deuxième milieu,
    - entre deux mailles voisines dans ladite première direction, une transmissibilité de convection et une transmissibilité de conduction dudit fluide selon lesdites première et deuxième directions dans ledit troisième milieu, lesdites transmissibilités de convection et de conduction dudit fluide étant nulles selon ladite première direction dans ledit troisième milieu,
    - au sein d'une maille de ladite représentation maillée, des échanges de masse par convection, des échanges d'énergie par convection et des échanges d'énergie par conduction entre lesdits deuxième et troisième milieux, entre lesdits premier et deuxième milieux, et entre ledit premier milieu et ledit troisième milieu,

    C) à partir de ladite représentation maillée et desdits paramètres d'écoulement en chacune des mailles de ladite représentation maillée, on simule lesdits écoulements dudit fluide dans ladite formation souterraine comportant ledit réseau de fractures au moyen d'un simulateur d'écoulement implémentant ledit modèle de porosité.

2.  Procédé selon la revendication 1, dans lequel lesdits échanges de masse $F_{w,i}^{ff}$ par convection entre lesdits deuxième et troisième milieux dans une desdites mailles i de ladite représentation maillée sont déterminés selon une formule

$$F_{w,i}^{ff} = \lambda_i^f T_i^{ff} (P_i^{fX} - P_i^{fY})$$

où $T_i^{ff}$ est une transmissibilité de convection entre lesdits deuxième et troisième milieux de ladite maille i, $P_i^{fX}$ et $P_i^{fY}$ correspondent à une pression dans respectivement lesdits deuxième et troisième milieux de ladite maille i, et $\lambda_i^f$ est une mobilité dudit fluide entre lesdits deuxième et troisième milieux de ladite maille i.

3. Procédé selon l'une des revendications précédentes, dans lequel lesdits échanges d'énergie par convection $F_{H,i}^{ff}$ entre lesdits deuxième et troisième milieux dans une desdites mailles i de ladite représentation maillée sont déterminés selon une formule

$$F_{H,i}^{ff} = \lambda_i^f H_i^f T_i^{ff} (P_i^{fX} - P_i^{fY})$$

où $H_i^f$ est une enthalpie dudit fluide entre lesdits deuxième et troisième milieux de ladite maille i, $T_i^{ff}$ est ladite transmissibilité de convection entre lesdits deuxième et troisième milieux de ladite maille i, $P_i^{fX}$ et $P_i^{fY}$ correspondent à ladite pression dans respectivement lesdits deuxième et troisième milieux de ladite maille i, et $\lambda_i^f$ est ladite mobilité dudit fluide entre lesdits deuxième et troisième milieux de ladite maille i.

4. Procédé selon l'une des revendications 2 à 3, dans lequel ladite transmissibilité de convection entre lesdits deuxième et troisième milieux de ladite maille i est déterminée selon une formule :

$$T_i^{ff} = \alpha \sum_{j \in \Omega_i} (T_{x,ij}^{fX} + T_{y,ij}^{fY})$$

où $\alpha$ est un coefficient multiplicateur valant au moins 100, de préférence au moins 1000, $\Omega_i$ est l'ensemble des mailles voisines de ladite maille i, $T_{x,ij}^{fX}$ correspond à ladite transmissibilité de convection selon ladite première direction dans ledit deuxième milieu pour ladite maille i, et $T_{y,ij}^{fY}$ correspond à ladite transmissibilité de convection selon ladite deuxième direction dans ledit troisième milieu pour ladite maille i.

5. Procédé selon l'une des revendications précédentes, dans lequel lesdits échanges d'énergie par conduction $F_{D,i}^{ff}$ entre lesdits deuxième et troisième milieux dans ladite maille i sont déterminés selon une formule :

$$F_{D,i}^{ff} = G_i^{ff} (\Theta_i^{fX} - \Theta_i^{fY})$$

où $G_i^{ff}$ est une transmissibilité de conduction entre lesdits deuxième et troisième milieux pour ladite maille i, $\Theta_i^{fX}$ et $\Theta_i^{fY}$ correspondent à la température respectivement dans lesdits deuxième et troisième milieux.

6. Procédé selon la revendication 5, dans lequel ladite transmissibilité de conduction entre lesdits deuxième et troisième milieux pour ladite maille i est déterminée selon une formule :

$$G_i^{ff} = \Lambda_i^{ff} C_i^{ff}$$

où $\Lambda_i^{ff}$ est une moyenne arithmétique d'une conductivité thermique effective desdits deuxième et troisième milieux, $C_i^{ff}$ est un coefficient géométrique dépendant des dimensions de ladite maille i, des dimensions d'un des blocs matriciels selon lesquels ledit premier milieu est découpé, et de l'ouverture desdites fractures desdits deuxième et troisième milieux.

7. Procédé pour exploiter un fluide d'une formation souterraine comportant un réseau de fractures, dans lequel on met en oeuvre le procédé selon l'une quelconque des revendications 1 à 6, et dans lequel, à partir au moins de ladite simulation desdits écoulements dans ladite formation souterraine, on détermine un schéma d'exploitation dudit fluide comprenant au moins une implantation d'au moins un puits injecteur et/ou d'au moins un puits producteur, et on exploite ledit fluide de ladite formation souterraine au moins en forant lesdits puits de ladite implantation et en les équipant d'infrastructures d'exploitation.

8. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications 1 à 6, lorsque ledit programme est exécuté sur un ordinateur.

**Patentansprüche**

1. Computerrealisiertes Verfahren, um Strömungen eines Fluids in einer ein Bruchnetzwerk aufweisenden unterirdischen Formation zu simulieren, mit dem Ziel, das Fluid der unterirdischen Formation zu nutzen, wobei ausgehend von Messungen von Eigenschaften betreffend die Formation eine vermaschte Darstellung der Formation konstruiert wird und mindestens statistische Parameter betreffend das Bruchnetzwerk bestimmt werden, **dadurch gekennzeichnet, dass** das Verfahren mindestens die folgenden Schritte enthält:

A) ausgehend mindestens von den statistischen Parametern betreffend das Bruchnetzwerk wird ein Porositätsmodell der das Bruchnetzwerk aufweisenden unterirdischen Formation konstruiert, wobei das Porositätsmodell ein erstes Milieu, das für eine nicht gebrochene Matrix der Formation repräsentativ ist, ein zweites Milieu, das für die Brüche der Formation repräsentativ ist, die gemäß einer ersten Richtung ausgerichtet sind, und ein drittes Milieu enthält, das für die Brüche der Formation repräsentativ ist, die gemäß einer zweiten Richtung ausgerichtet sind, wobei die ersten und zweiten Richtungen orthogonal zueinander sind;

B) ausgehend mindestens von den Messungen von Eigenschaften betreffend die Formation, den statistischen Parametern betreffend das Bruchnetzwerk und dem Porositätsmodell werden Strömungsparameter in jeder der Maschen der vermaschten Darstellung bestimmt, wobei die Strömungsparameter mindestens enthalten:

- zwischen zwei benachbarten Maschen in der zweiten Richtung eine Konvektionsübertragbarkeit und eine Konduktionsübertragbarkeit des Fluids gemäß der ersten und der zweiten Richtung im zweiten Milieu, wobei die Konvektions- und Konduktionsübertragbarkeiten des Fluids gemäß der zweiten Richtung im zweiten Milieu null sind,
- zwischen zwei benachbarten Maschen in der ersten Richtung eine Konvektionsübertragbarkeit und eine Konduktionsübertragbarkeit des Fluids gemäß der ersten und der zweiten Richtung im dritten Milieu, wobei die Konvektions- und Konduktionsübertragbarkeiten des Fluids gemäß der ersten Richtung im dritten Milieu null sind,
- innerhalb einer Masche der vermaschten Darstellung Massenaustauschvorgänge durch Konvektion, Energieaustauschvorgänge durch Konvektion und Energieaustauschvorgänge durch Konduktion zwischen dem zweiten und dem dritten Milieu, zwischen dem ersten und dem zweiten Milieu, und zwischen dem ersten Milieu und dem dritten Milieu,

C) ausgehend von der vermaschten Darstellung und den Strömungsparametern in jeder der Maschen der vermaschten Darstellung werden die Strömungen des Fluids in der das Bruchnetzwerk aufweisenden unterirdischen Formation mittels eines Strömungssimulators simuliert, der das Porositätsmodell ausführt.

2. Verfahren nach Anspruch 1, wobei die Massenaustauschvorgänge $F_{w,i}^{ff}$ durch Konvektion zwischen dem zweiten und dem dritten Milieu in einer der Maschen i der vermaschten Darstellung gemäß einer Formel

$$F_{w,i}^{ff} = \lambda_i^f T_i^{ff} \left( P_i^{fX} - P_i^{fY} \right)$$

bestimmt werden, wobei $T_i^{ff}$ eine Konvektionsübertragbarkeit zwischen dem zweiten und dem dritten Milieu der Masche i ist, $P_i^{fX}$ und $P_i^{fY}$ einem Druck im zweiten bzw. dritten Milieu der Masche i entsprechen, und $\lambda_i^f$ eine Mobilität des Fluids zwischen dem zweiten und dem dritten Milieu der Masche i ist.

3. Verfahren nach einem der vorhergehenden Ansprüche, wobei die Energieaustauschvorgänge durch Konvektion $F_{H,i}^{ff}$ zwischen dem zweiten und dem dritten Milieu in einer der Maschen i der vermaschten Darstellung gemäß einer Formel

$$F_{H,i}^{ff} = \lambda_i^f H_i^f T_i^{ff} \left( P_i^{fX} - P_i^{fY} \right)$$

bestimmt werden, in der $H_i^f$ eine Enthalpie des Fluids zwischen dem zweiten und dem dritten Milieu der Masche i ist, $T_i^{ff}$ die Konvektionsübertragbarkeit zwischen dem zweiten und dem dritten Milieu der Masche i ist, $P_i^{fX}$ und $P_i^{fY}$ dem Druck in dem zweiten bzw. dem dritten Milieu der Masche i entsprechen, und $\lambda_i^f$ die Mobilität des Fluids zwischen dem zweiten und dem dritten Milieu der Masche i ist.

4. Verfahren nach einem der Ansprüche 2 bis 3, wobei die Konvektionsübertragbarkeit zwischen dem zweiten und dem dritten Milieu der Masche i gemäß einer Formel:

$$T_i^{ff} = \alpha \sum_{j \in \Omega_i} \left( T_{x,ij}^{fX} + T_{y,ij}^{fY} \right)$$

bestimmt wird, wobei $\alpha$ ein Multiplikationskoeffizient mit dem Wert mindestens 100 ist, vorzugsweise mindestens 1000, $\Omega_i$ die Gesamtheit der der Masche i benachbarten Maschen ist, $T_{x,ij}^{fX}$ der Konvektionsübertragbarkeit gemäß der ersten Richtung im zweiten Milieu für die Masche i entspricht, und $T_{y,ij}^{fY}$ der Konvektionsübertragbarkeit gemäß der zweiten Richtung im dritten Milieu für die Masche i entspricht.

5. Verfahren nach einem der vorhergehenden Ansprüche, wobei die Energieaustauschvorgänge durch Konduktion $F_{D,i}^{ff}$ zwischen dem zweiten und dem dritten Milieu in der Masche i gemäß einer Formel:

$$F_{D,i}^{ff} = G_i^{ff} \left( \Theta_i^{fX} - \Theta_i^{fY} \right)$$

bestimmt werden, in der $G_i^{ff}$ eine Konduktionsübertragbarkeit zwischen dem zweiten und dem dritten Milieu für die Masche i ist, $\Theta_i^{fX}$ und $\Theta_i^{fY}$ der Temperatur im zweiten bzw. dritten Milieu entsprechen.

6. Verfahren nach Anspruch 5, wobei die Konduktionsübertragbarkeit zwischen dem zweiten und dem dritten Milieu für die Masche i gemäß einer Formel:

$$G_i^{ff} = \Lambda_i^{ff} C_i^{ff}$$

bestimmt wird, in der $\Lambda_i^{ff}$ ein arithmetisches Mittel einer effektiven Wärmeleitfähigkeit der zweiten und des dritten Milieus ist, $C_i^{ff}$ ein geometrischer Koeffizient ist, der von den Abmessungen der Masche i, den Abmessungen eines der Matrixblöcke, gemäß denen das erste Milieu aufgeteilt ist, und der Öffnung der Brüche des zweiten und des dritten Milieus abhängt.

7. Verfahren zur Nutzung eines Fluids einer ein Bruchnetzwerk aufweisenden unterirdischen Formation, wobei das Verfahren nach einem der Ansprüche 1 bis 6 durchgeführt wird, und wobei, ausgehend mindestens von der Simulation der Strömungen in der unterirdischen Formation, ein Nutzungsschema des Fluids bestimmt wird, das mindestens eine Anordnung mindestens eines Injektionsbohrung und/oder mindestens einer Förderbohrung enthält, und das Fluid der unterirdischen Formation mindestens durch Bohren der Bohrungen der Anordnung und durch ihre Ausstattung mit Nutzungsinfrastrukturen genutzt wird.

8. Computerprogrammprodukt, das von einem Kommunikationsnetz herunterladbar und/oder auf einem computerlesbaren Träger gespeichert und/oder von einem Prozessor ausführbar ist, das Programmcodeanweisungen zur Durchführung des Verfahrens nach einem der Ansprüche 1 bis 6 enthält, wenn das Programm auf einem Computer ausgeführt wird.

**Claims**

1. Method implemented by computer for simulating flows of a fluid in an underground formation comprising a network of cracks in order to exploit said fluid of said underground formation, wherein, based on measurements of properties relating to said formation, a meshed representation of said formation is constructed and at least statistical parameters relating to said network of cracks are determined, **characterized in that** said method comprises at least the following steps:

A) based on at least said statistical parameters relating to said network of cracks, a model of porosity of said underground formation comprising said network of cracks is constructed, said model of porosity comprising a first medium representative of a non-cracked matrix of said formation, a second medium representative of said cracks of said formation oriented in a first direction, and a third medium representative of said cracks of said formation oriented in a second direction, said first and second directions being orthogonal to one another;

B) based on at least said measurements of properties relating to said formation, on statistical parameters relating to said network of cracks, and on said model of porosity, flow parameters in each of the meshes of said meshed representation are determined, said flow parameters comprising at least:

- between two neighbouring meshes in said second direction, a transmissibility of convection and a transmissibility of conduction of said fluid in said first and second directions in said second medium, said transmissibilities of convection and of conduction of said fluid being zero in said second direction in said second medium,

- between two neighbouring meshes in said first direction, a transmissibility of convection and a transmissibility of conduction of said fluid in said first and second directions in said third medium, said transmissibilities of convection and of conduction of said fluid being zero in said first direction in said third medium,

- within a mesh of said meshed representation, exchanges of weight by convection, exchanges of energy by convection and exchanges of energy by conduction between said second and third media, between said first and second media, and between said first medium and said third medium,

C) based on said meshed representation and on said flow parameters in each of the meshes of said meshed representation, said flows of said fluid in said underground formation comprising said network of cracks are simulated by means of a flow simulator implementing said model of porosity.

2. Method according to Claim 1, wherein said exchanges of weight $F_{w,i}^{ff}$ by convection between said second and third media in one of said meshes i of said meshed representation are determined according to a formula

$$F_{w,i}^{ff} = \lambda_i^f T_i^{ff} (P_i^{fX} - P_i^{fY})$$

in which $T_i^{ff}$ is a transmissibility of convection between said second and third media of said mesh i, $P_i^{fX}$ and $P_i^{fY}$ correspond to a pressure in respectively said second and third media of said mesh i, and $\lambda_i^f$ is a mobility of said fluid between said second and third media of said mesh i.

3. Method according to one of the preceding claims, wherein said exchanges of energy by convection $F_{H,i}^{ff}$ between said second and third media in one of said meshes i of said meshed representation are determined according to a formula

$$F_{H,i}^{ff} = \lambda_i^f H_i^f T_i^{ff} (P_i^{fX} - P_i^{fY})$$

in which $H_i^f$ is an enthalpy of said fluid between said second and third media of said mesh i, $T_i^{ff}$ is said transmissibility of convection between said second and third media of said mesh i, $P_i^{fX}$ and $P_i^{fY}$ correspond to said pressure in respectively said second and third media of said mesh i, and $\lambda_i^f$ is said mobility of said fluid between said second and third media of said mesh i.

4. Method according to one of Claims 2 and 3, wherein said transmissibility of convection between said second and third media of said mesh i is determined according to a formula:

$$T_i^{ff} = \alpha \sum_{j \in \Omega_i} (T_{x,ij}^{fX} + T_{y,ij}^{fY})$$

in which $\alpha$ is a multiplying coefficient with a value of at least 100, preferably at least 1000, $\Omega_i$ is the set of the neighbouring meshes of said mesh i, $T_{x,ij}^{fX}$ corresponds to said transmissibility of convection in said first direction in said second medium for said mesh i, and $T_{y,ij}^{fY}$ corresponds to said transmissibility of convection in said second direction in said third medium for said mesh i.

5. Method according to one of the preceding claims, wherein said exchanges of energy by conduction $F_{D,i}^{ff}$ between said second and third media in said mesh i are determined according to a formula:

$$F_{D,i}^{ff} = G_i^{ff} (\Theta_i^{fX} - \Theta_i^{fY})$$

in which $G_i^{ff}$ is a transmissibility of conduction between said second and third media for said mesh i, $\Theta_i^{fX}$ and $\Theta_i^{fY}$ correspond to the temperature respectively in said second and third media.

**6.** Method according to Claim 5, wherein said transmissibility of conduction between said second and third media for said mesh i is determined according to a formula:

$$G_i^{ff} = \Lambda_i^{ff} C_i^{ff}$$

in which $\Lambda_i^{ff}$ is an arithmetic mean of an effective thermal conductivity of said second and third media,

$C_i^{ff}$ is a geometrical coefficient dependent on the dimensions of said mesh i, on the dimensions of one of the matrix blocks according to which said first medium is cut, and on the opening of said cracks of said second and third media.

**7.** Method for exploiting a fluid of an underground formation comprising a network of cracks, wherein the method according to any one of Claims 1 to 6 is implemented, and wherein, based on at least said simulation of said flows in said underground formation, a scheme for exploitation of said fluid is determined comprising at least one implantation of at least one injection well and/or of at least one production well, and said fluid of said underground formation is exploited at least by drilling said wells of said implantation and by equipping them with exploitation infrastructures.

**8.** Computer program product that can be downloaded from a communication network and/or stored on a computer-readable medium and/or that can be executed by a processor, comprising program code instructions for implementing the method according to one of Claims 1 to 6, when said program is run on a computer.

[Fig 1]

[Fig 2]

[Fig 3]

[Fig 4]

[Fig 5]

[Fig 6]

[Fig 7]

[Fig 8]

[Fig 9]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2757957
- US 6064944 A
- FR 2923930
- US 8688424 B
- FR 3045868
- US 10641923 B

### Littérature non-brevet citée dans la description

- Numerical Modelling of Geothermal Réservoirs with Multiple Pore Media. **ALIYU, M.D. ; CHEN, H.P. ; HARIRECHE, O. ; HILLS, C.D.** PROCEEDINGS, 42nd Workshop on Geothermal Réservoir Engineering. Stanford University, 13 Février 2017
- **AUSTRIA, J. ; O'SULLIVAN, M.** Dual Porosity Models of a Two-phase Geothermal Réservoir. *Proceedings World Geothermal Congress 2015, Melbourne, Australia,* 19 Avril 2015
- **FUJII, S. ; ISHIGAMI, Y. ; KURIHARA, M.** Development of Geothermal Réservoir Simulator for Predicting Three-dimensional Water-Steam Flow Behavior Considering Non-equilibrium State and Kazemi/MINC Double Porosity System. *GRC Transaction,* 2018, vol. 42
- **OMAGBON, J. ; O'SULLIVAN, M. ; O'SULLIVAN, J. ; WALKER, C.** Expériences in Developing a Dual Porosity Model of the Leyte Geothermal Production Field. *Proceedings of 38th New Zealand Geothermal Workshop, Auckland, New Zealand,* 23 Novembre 2016
- **WARREN, J. E. ; ROOT, P. J.** The Behavior of Naturally Fractured Réservoirs. *SPE Journal,* 1963, vol. 3, 245-255
- **LEMONNIER, P. ; BOURBIAUX, B.** Simulation of Naturally Fractured Réservoirs. State of the Art Part 2, MatriX-fractures Transfers and Typical Features of Numerical Studies. *Oil & Gas Science and Technology,* 2010, vol. 65 (2), 263-286